(19) Europäisches Patentamt
European Patent Office
Office européen des brevets

(11) **EP 4 398 493 A1**

(12) **EUROPEAN PATENT APPLICATION**
published in accordance with Art. 153(4) EPC

(43) Date of publication:
**10.07.2024 Bulletin 2024/28**

(21) Application number: **22863672.6**

(22) Date of filing: **06.09.2022**

(51) International Patent Classification (IPC):
**H04B 7/0456** (2017.01)    **H04B 7/06** (2006.01)

(52) Cooperative Patent Classification (CPC):
**H04B 7/0456; H04B 7/06**

(86) International application number:
**PCT/CN2022/117269**

(87) International publication number:
**WO 2023/030538 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2021  CN 202111039828**

(71) Applicant: **ZTE Corporation**
**Shenzhen, Guangdong 518057 (CN)**

(72) Inventors:
• **LI, Lun**
**Shenzhen, Guangdong 518057 (CN)**
• **XIAO, Huahua**
**Shenzhen, Guangdong 518057 (CN)**
• **WU, Hao**
**Shenzhen, Guangdong 518057 (CN)**
• **LIU, Lei**
**Shenzhen, Guangdong 518057 (CN)**
• **LU, Zhaohua**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **METHOD FOR PROCESSING CHANNEL STATE INFORMATION, AND TERMINAL, BASE STATION AND COMPUTER-READABLE STORAGE MEDIUM**

(57)    Provided in the present disclosure is a method for processing channel state information. The method comprises: performing preprocessing on original channel information to generate first channel information, wherein the first channel information comprises a plurality of first channel information components; performing compression coding according to at least one first channel information component of the first channel information, so as to generate second channel information; and feeding back channel state information, wherein the channel state information at least comprises the second channel information. Further provided in the present disclosure are a terminal, a base station and a computer-readable storage medium.

FIG. 1

**Description**

CROSS-REFERENCE TO RELATED APPLICATIONS

This application claims priority from Chinese patent application No. 202111039828.4 filed on September 6, 2021, the entirety of which is incorporated hereby by reference.

TECHNICAL FIELD

The present disclosure relates to the field of communication technology, and particularly relates to a method for processing channel state information and terminal, a base station and a computer-readable storage medium.

BACKGROUND

As one of the important means for improving wireless communication performance, the multi-antenna technology has been widely applied to standards such as Long Term Evolution (LTE), Long Term Evolution-Advanced (LTE-A), New Radio Access Technology (NR), and the like.

In some related technologies, the processing of the channel state information cannot satisfy the requirement of performance improvement of the multi-antenna technology.

SUMMARY

In a first aspect, an embodiment of the present disclosure provides a method for processing channel state information, including: pre-processing original channel information to generate first channel information including a plurality of first channel information components; performing compression coding according to at least one first channel information component of the first channel information to generate second channel information; and feeding back channel state information including at least the second channel information.

In a second aspect, an embodiment of the present disclosure provides a method for processing channel state information, including: receiving channel state information including at least second channel information obtained by performing compression coding according to at least one first channel information component of first channel information, wherein the first channel information is obtained by pre-processing original channel information; performing decompression decoding according to the second channel information to obtain third channel information; and determining target channel information according to at least the third channel information.

In a third aspect, an embodiment of the present disclosure provides a terminal, including: at least one processor; and a memory having at least one computer program stored thereon which, when executed by the at least one processor, causes the at least one processor to implement the method for processing channel state information according to the embodiment of the present disclosure in the first aspect; and at least one I/O interface connected between the processor and the memory and configured to enable information interaction between the processor and the memory.

In a fourth aspect, an embodiment of the present disclosure provides a base station, including: at least one processor; and a memory having at least one computer program stored thereon which, when executed by the at least one processor, causes the at least one processor to implement the method for processing channel state information according to the embodiment of the present disclosure in the second aspect; and at least one I/O interface connected between the processor and the memory and configured to enable information interaction between the processor and the memory.

In a fifth aspect, an embodiment of the present disclosure provides a computer-readable storage medium storing a computer program thereon which, when executed by a processor, causes the processor to implement at least one of: the method for processing channel state information according to the embodiment of the present disclosure in the first aspect; or the method for processing channel state information according to the embodiment of the present disclosure in the second aspect.

BRIEF DESCRIPTION OF DRAWINGS

FIG. 1 is a flowchart of a method for processing channel state information according to an embodiment of the present disclosure;

FIG. 2 is a flowchart of some operations in a method for processing channel state information according to an embodiment of the present disclosure;

FIG. 3 is a flowchart of some operations in a method for processing channel state information according to an embodiment of the present disclosure;

FIG. 4 is a flowchart of some operations in a method for processing channel state information according to an embodiment of the present disclosure;

FIG. 5 is a flowchart of some operations in a method for processing channel state information according to an embodiment of the present disclosure;

FIG. 6 is a flowchart of some operations in a method for processing channel state information according to an embodiment of the present disclosure;

FIG. 7 is a flowchart of some operations in a method for processing channel state information according to an embodiment of the present disclosure;

FIG. 8 is a flowchart of some operations in a method for processing channel state information according to an embodiment of the present disclosure;

FIG. 9 is a flowchart of some operations in a method for processing channel state information according to an embodiment of the present disclosure;

FIG. 10 is a flowchart of some operations in a method for processing channel state information according to an embodiment of the present disclosure;

FIG. 11 is a flowchart of some operations in a method for processing channel state information according to an embodiment of the present disclosure;

FIG. 12 is a flowchart of a method for processing channel state information according to an embodiment of the present disclosure;

FIG. 13 is a flowchart of some operations in a method for processing channel state information according to an embodiment of the present disclosure;

FIG. 14 is a flowchart of some operations in a method for processing channel state information according to an embodiment of the present disclosure;

FIG. 15 is a flowchart of some operations in a method for processing channel state information according to an embodiment of the present disclosure;

FIG. 16 is a flowchart of some operations in a method for processing channel state information according to an embodiment of the present disclosure;

FIG. 17 is a flowchart of some operations in a method for processing channel state information according to an embodiment of the present disclosure;

FIG. 18 is a flowchart of some operations in a method for processing channel state information according to an embodiment of the present disclosure;

FIG. 19 is a flowchart of some operations in a method for processing channel state information according to an embodiment of the present disclosure;

FIG. 20 is a flowchart of some operations in a method for processing channel state information according to an embodiment of the present disclosure;

FIG. 21 is a flowchart of some operations in a method for processing channel state information according to an embodiment of the present disclosure;

FIG. 22 is a flowchart of some operations in a method for processing channel state information according to an embodiment of the present disclosure;

FIG. 23 is a block diagram of a terminal according to an embodiment of the present disclosure;

FIG. 24 is a block diagram of a base station according to an embodiment of the present disclosure;

FIG. 25 is a block diagram of a computer-readable storage medium according to an embodiment of the present disclosure;

FIG. 26 is a schematic diagram of an example according to an embodiment of the present disclosure;

FIG. 27 is a schematic diagram of an example according to an embodiment of the present disclosure;

FIG. 28 is a schematic diagram of an example according to an embodiment of the present disclosure;

FIG. 29 is a schematic diagram of an example according to an embodiment of the present disclosure;

FIG. 30 is a schematic diagram of an example according to an embodiment of the present disclosure;

FIG. 31 is a schematic diagram of an example according to an embodiment of the present disclosure; and

FIG. 32 is a schematic diagram of an example according to an embodiment of the present disclosure.

DETAIL DESCRIPTION OF EMBODIMENTS

To improve understanding of the technical solution of the present disclosure for those skilled in the art, the following describes the method for processing channel state information, and terminal, the base station and the computer-readable storage medium of the present disclosure in detail with reference to the accompanying drawings.

Exemplary embodiments will be described more sufficiently below with reference to the accompanying drawings, but which may be embodied in different forms and the present disclosure should not be construed as limited to the embodiments set forth herein. These embodiments are provided so that the present disclosure will be more thorough and complete, and will fully convey the scope the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of specific features, integers, operations, operations, elements, and/or components, but do not preclude the presence or addition of one or more other features, entities, operations, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

With the continuously improved standard indexes of communications, how to acquire channel state information (CSI) more accurately has become a key for improving the performance of the multi-antenna technology. In a multi-antenna system, due to the influence of a large-scale antenna array, downlink channel state information fed back to a base station (BS) from a user equipment (UE) has an overhead increasing with the increased number of antennas, and the base station includes any one of a gNB, an eNB, or a Node B. Meanwhile, in a complex environment, the accuracy of the downlink channel state information recovered at the base station according to codebook information fed back by the UE also needs to be improved.

Artificial intelligence (AI) technology exhibits powerful feature extraction and learning capabilities in the fields of computer vision, natural language processing, and speech signal processing. In some related technologies, artificial intelligence is introduced into a wireless communication system in an attempt to break through technology bottlenecks in some related communication systems. However, the accuracy of the channel state information feedback and the overhead cost cannot be well balanced.

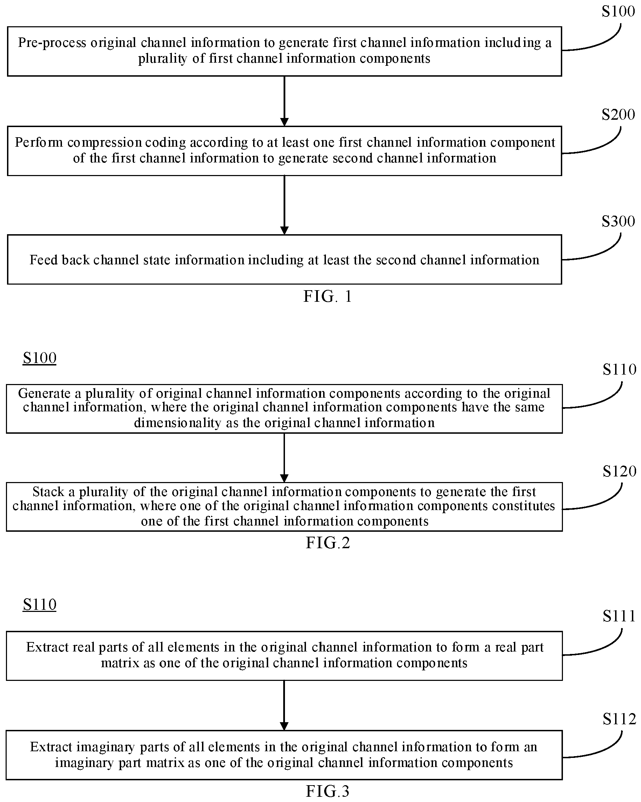

In a first aspect, referring to FIG. 1, an embodiment of the present disclosure provides a method for processing channel state information, which includes the following operations S100 to S300.

At S100, pre-processing original channel information to generate first channel information including a plurality of first channel information components.

At S200, performing compression coding according to at least one first channel information component of the first channel information to generate second channel information.

At S300, feeding back channel state information including at least the second channel information.

In the method for processing channel state information according to the embodiment of the present disclosure, the terminal obtains the original channel information by receiving channel state reference information, e.g., channel state information reference signal (CSI-RS). The original channel information is not particularly limited in the present disclosure. For example, the original channel information may be time domain channel information, frequency domain channel information, or pre-coded channel information obtained by pre-coding frequency domain channel information. In some implementations, due to sparsity of the time domain channel information, the time domain channel information obtained according to the channel state reference information may be truncated to obtain the original channel information. In some implementations, the frequency domain granularity may be obtained by performing fast Fourier transform on time domain sampling points, so that the frequency domain channel information obtained according to the channel state reference information may be truncated to obtain the original channel information.

The terminal is not particularly limited in the present disclosure, and may be any one of a mobile phone, a data card, a laptop, or various manufacturing devices of a factory.

In the method for processing channel state information according to the embodiment of the present disclosure, the first channel information obtained by pre-processing the original channel information includes multiple dimension including a channel dimension. According to the channel dimension, the first channel information may be divided into a plurality of first channel information components. For example, the first channel information is a three-dimensional matrix with a size $N_1 \times N_2 \times C_1$, where $C_1$ is the channel dimension, and according to the channel dimension, the first channel information may be divided into $C_1$ two-dimensional matrices each with a size $N_1 \times N_2$ and each of which constitutes one first channel information component of the first channel information.

In the method for processing channel state information according to the embodiment of the present disclosure, in the operation S200, compression coding may be performed on all first channel information components of the first channel information to obtain the second channel information; or compression coding may be performed on part of first channel information components of the first channel information to obtain the second channel information, which is not particularly limited in the present disclosure. Correspondingly, in operation S300, the channel state information fed back includes at least the second channel information, which means that when compression coding is performed on all first channel information components of the first channel information, only the second channel information is fed back; and when compression coding is performed on part of first channel information components of the first channel information, the second channel information and first channel information components in the first channel information which are not subjected to compression coding are fed back.

It should be noted that when compression coding is performed on all first channel information components of the first channel information, the overhead cost of feeding back the channel state information is relatively low; and when compression coding is performed on part of first channel information components of the first channel information, accuracy of feeding back the channel state information is relatively high.

In some implementations, whether the compression coding is performed on all first channel information components of the first channel information or on part of first channel information components of the first channel information is determined by the terminal according to information of at least one channel characteristic including a channel scene, channel angle spread, delay spread, Doppler spread, or the like, so that the overhead cost and the accuracy of the channel state information feedback can be balanced according to channel characteristics.

In the method for processing channel state information according to the embodiment of the present disclosure, original channel information can be pre-processed to obtain first channel information having a plurality of first channel information components, and all or part of the first channel information components of the first channel information can be subjected to compression coding, corresponding to different overhead costs and accuracies of the channel state information feedback, respectively, so that the overhead cost and the accuracy can be balanced when the channel state information is fed back, and the accuracy and the overhead cost of the channel state information feedback can be both effectively considered.

In some implementations, before the operation S100, the method for processing channel state information further includes acquiring the original channel information.

The method for pre-processing the original channel information to obtain the first channel information is not particularly limited in the present disclosure.

In some implementations, referring to FIG. 2, the operation S100 includes operations S110 and S120.

At S110, generating a plurality of original channel information components according to the original channel information, where the original channel information components have the same dimension as the original channel information.

At S120, stacking a plurality of the original channel information components to generate the first channel information, where one of the original channel information components constitutes one of the first channel information components.

In some implementations, the original channel information is a two-dimensional complex matrix with a size $N_t \times M$, where $N_t$ is the number of antennas, and M is a time domain granularity or frequency domain granularity. At operation S110, generating C original channel information components according to the original channel information, where each of the original channel information components is a two-dimensional real matrix with a size $N_t \times M$. In operation S120, stacking the plurality of the original channel information components to generate the first channel information includes stacking C two-dimensional real matrices each with a size $N_t \times M$, where the generated first channel information is a three-dimensional real matrix with a size $N_t \times M \times C$, and each two-dimensional real matrix with a size $N_t \times M$ forms one first channel information component of the first channel information.

In some implementations, the original channel information is time domain channel information, the time domain granularity is the number of time domain sampling points, and the original channel information is a complex matrix with a size $N_t \times N_s$, where $N_t$ is the number of antennas, and $N_s$ is the number of time domain sampling points. In an antenna dimension, the number of antennas $N_t$ is $N_{tx} \times N_{rx}$, where N, represents the number of transmitting antennas, and $N_{rx}$ represents the number of receiving antennas. The number of antennas $N_t$ may also be $N_{tx} \times R$, where N, represents the number of transmitting antennas, and R is the channel rank or the number of data streams. According to the original channel information, $C$ original channel information components can be generated, where each of the original channel information components is a two-dimensional real matrix with a size $N_t \times N_s$, and $C$ original channel information components are stacked to generate first channel information in the form of a three-dimensional real matrix with a size $N_t \times N_s \times C$, each two-dimensional real matrix with a size $N_t \times N_s$ forms one first channel information component.

In some implementations, the original channel information is frequency domain channel information, the frequency domain granularity is in units of subcarriers, physical resource blocks or subbands, and the original channel information is a complex matrix with a size $N_t \times N_f$, where $N_t$ is the number of antennas, and $N_f$ is the frequency domain granularity. In the antenna dimension, the number of antennas $N_t$ is $N_{tx} \times N_{rx}$, where $N_{tx}$ represents the number of transmitting antennas, and $N_{rx}$ represents the number of receiving antennas. The number of antennas $N_t$ may also be $N_{tx} \times R$, where $N_{tx}$ represents the number of transmitting antennas, and R is the channel rank or the number of data streams. According to the original channel information, *C* original channel information components can be generated, where each of the original channel information components is a two-dimensional real matrix with a size $N_t \times N_f$, and *C* original channel information components are stacked to generate first channel information in the form of a three-dimensional real matrix with a size $N_t \times N_f \times C$, and each two-dimensional real matrix with a size $N_t \times N_f$ forms one first channel information component.

In the case that the original channel information is a two-dimensional complex matrix, how to generate a plurality of original channel information components from the original channel information, and how to stack the plurality of original channel information components to generate the first channel information are not particularly limited in the present disclosure. For example, the original channel information is split into a real part matrix and an imaginary part matrix, which respectively form an original channel information component of the original channel information; and the real part matrix and the imaginary part matrix are stacked to generate the first channel information in the form of a three-dimensional matrix, where the first channel information includes a plurality of first channel information components each in the form of a two-dimensional matrix. Therefore, the first channel information includes a first channel information component the same as the real part matrix, and a first channel information component the same as the imaginary part matrix. For example, the original channel information is split into a real part absolute value matrix, a real part symbol matrix, an imaginary part absolute value matrix and an imaginary part symbol matrix, which respectively form an original channel information component of the original channel information; and the real part absolute value matrix, the real part symbol matrix, the imaginary part absolute value matrix and the imaginary part symbol matrix are stacked to generate the first channel information in the form of a three-dimensional matrix, where the first channel information includes a plurality of first channel information components each in the form of a two-dimensional matrix. Therefore, the first channel information includes a first channel information component the same as the real part absolute value matrix, a first channel information component the same as the real part symbol matrix, a first channel information component the same as the imaginary part absolute value matrix, and a first channel information component the same as the imaginary part symbol matrix. For example, the original channel information is split into an amplitude matrix and a phase matrix, which respectively form an original channel information component of the original channel information; and the amplitude matrix and the phase matrix are stacked to generate the first channel information in the form of a three-dimensional matrix, where the first channel information includes a plurality of first channel information components each in the form of a two-dimensional matrix. Therefore, the first channel information includes a first channel information component the same as the amplitude matrix, and a first channel information component the same as the phase matrix.

In some implementations, referring to FIG. 3, the operation S110 includes operations S111 and S112.

At S111, extracting real parts of all elements in the original channel information to form a real part matrix as one of the original channel information components.

At S112, extracting imaginary parts of all elements in the original channel information to form an imaginary part matrix as one of the original channel information components.

In the case of generating the original channel information components through operations S111 and S112, the real part matrix and the imaginary part matrix are stacked to obtain first channel information, where the real part matrix and the imaginary part matrix respectively form a first channel information component of the first channel information. For example, the original channel information is frequency domain channel information $H_f$, which is a complex matrix of $N_t \times N_f$, where $N_t$ is the number of antennas, $N_f$ is the frequency domain granularity, the first channel information is a three-dimensional real matrix with a size $N_t \times N_f \times 2$, and the number of the first channel information components of the first channel information is 2.

In some implementations, both the real part matrix and the imaginary part matrix may be subjected to compression coding in operation S200. For example, the real part matrix and the imaginary part matrix may be subjected to compression coding separately, or the real part matrix and the imaginary part matrix may be subjected to compression coding in the form of the three-dimensional matrix obtained by stacking the real part matrix and the imaginary part matrix. In operation S300, the second channel information obtained through compression coding is taken as channel state information for feedback.

In some implementations, it is possible that only the real part matrix is subjected to compression coding in operation S200. In operation S300, the imaginary part matrix and the second channel information obtained through compression coding is taken as channel state information for feedback.

In some implementations, it is possible that only the imaginary part matrix is subjected to compression coding in operation S200. In operation S300, the real part matrix and the second channel information obtained through compression coding is taken as channel state information for feedback.

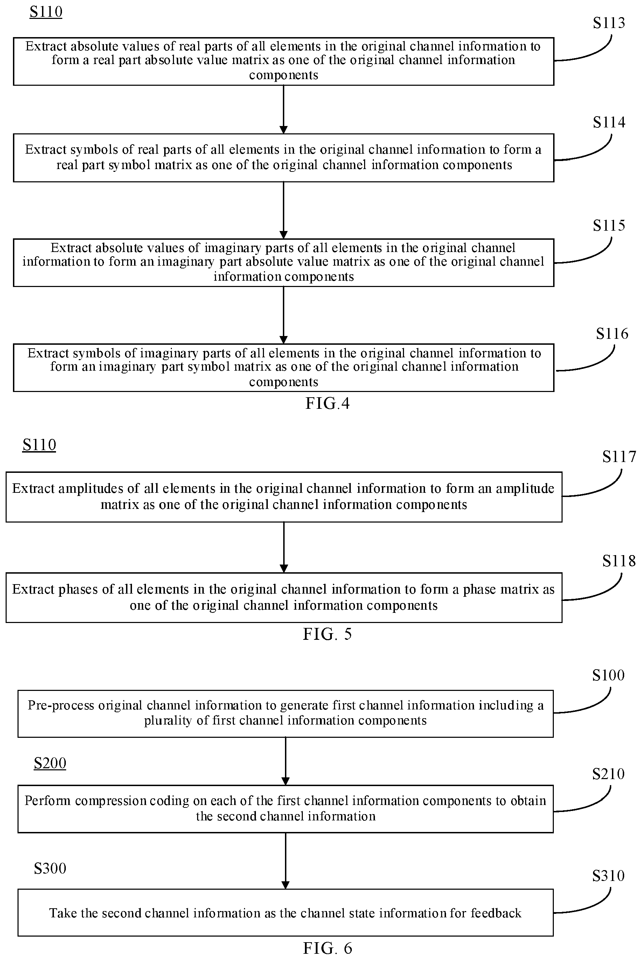

In some implementations, referring to FIG. 4, the operation S110 includes operations S113 to S116.

At S113, extracting absolute values of real parts of all elements in the original channel information to form a real part absolute value matrix as one of the original channel information components.

At S114, extracting symbols of real parts of all elements in the original channel information to form a real part symbol matrix as one of the original channel information components.

At S115, extracting absolute values of imaginary parts of all elements in the original channel information to form an imaginary part absolute value matrix as one of the original channel information components.

At S116, extracting symbols of imaginary parts of all elements in the original channel information to form an imaginary part symbol matrix as one of the original channel information components.

In the case of generating the original channel information components through operations S113 to S116, the real part absolute value matrix, the real part symbol matrix, the imaginary part absolute value matrix and the imaginary part symbol matrix are stacked to obtain first channel information, where the real part absolute value matrix, the real part symbol matrix, the imaginary part absolute value matrix and the imaginary part symbol matrix respectively form a first channel information component of the first channel information. For example, the first channel information is a three-dimensional real matrix with a size $N_t \times N_f \times 4$, and the number of the first channel information components of the first channel information is 4.

In some implementations, in operation S200, the real part absolute value matrix, the real part symbol matrix, the imaginary part absolute value matrix and the imaginary part symbol matrix may be all subjected to compression coding. In operation S300, the second channel information obtained through compression coding is taken as channel state information for feedback.

In some implementations, in operation S200, any one, two or three of the real part absolute value matrix, the real part symbol matrix, the imaginary part absolute value matrix and the imaginary part symbol matrix may be subjected to compression coding. The real part absolute value matrix and imaginary part absolute value matrix are referred as absolute value matrices, and the real part symbol matrix and imaginary part symbol matrix are referred as symbol matrices. For example, it is possible that only the absolute value matrices are subjected to compression coding, and in operation S300, the symbol matrices and the second channel information obtained through compression coding is taken as channel state information for feedback. For example, it is possible that only the symbol matrices are subjected to compression coding, and in operation S300, the absolute value matrices and the second channel information obtained through compression coding is taken as channel state information for feedback.

In some implementations, referring to FIG. 5, the operation S110 includes operations S117 and S118.

At S117, extracting amplitudes of all elements in the original channel information to form an amplitude matrix as one of the original channel information components.

At S118, extracting phases of all elements in the original channel information to form a phase matrix as one of the original channel information components.

In the case of generating the original channel information components through operations S117 and S 118, the amplitude matrix and the phase matrix are stacked to obtain first channel information, where the amplitude matrix and the phase matrix respectively form a first channel information component of the first channel information. For example, the first channel information is a three-dimensional real matrix with a size $N_t \times N_f \times 2$, and the number of the first channel information components of the first channel information is 2.

It should be noted that given that one element in the original channel information is represented by $a_{x,y} + b_{x,y}i$, then an amplitude of the element $a_{x,y} + b_{x,y}i$ is represented by $\sqrt{a_{x,y}^2 + b_{x,y}^2}$, and the amplitude matrix is a matrix formed by amplitudes of respective elements; a phase of the element $a_{x,y} + b_{x,y}i$ is represented by $\tan^{-1}\dfrac{b_{x,y}}{a_{x,y}}$, and the phase matrix is a matrix formed by phases of respective elements.

In some implementations, both the amplitude matrix and the phase matrix may be subjected to compression coding in operation S200. In operation S300, the second channel information obtained through compression coding is taken as channel state information for feedback.

In some implementations, it is possible that only the amplitude matrix is subjected to compression coding in operation S200. In operation S300, the phase matrix and the second channel information obtained through compression coding is taken as channel state information for feedback.

In some implementations, it is possible that only the phase matrix is subjected to compression coding in operation S200. In operation S300, the amplitude matrix and the second channel information obtained through compression coding is taken as channel state information for feedback.

Accordingly, in some implementations, when compression coding is performed on all first channel information components of the first channel information, referring to FIG. 6, the operation S200 includes operation S210, and the operation S300 includes operation S310.

At S210, performing compression coding on each of the first channel information components to obtain the second channel information.

At S310, taking the second channel information as the channel state information for feedback.

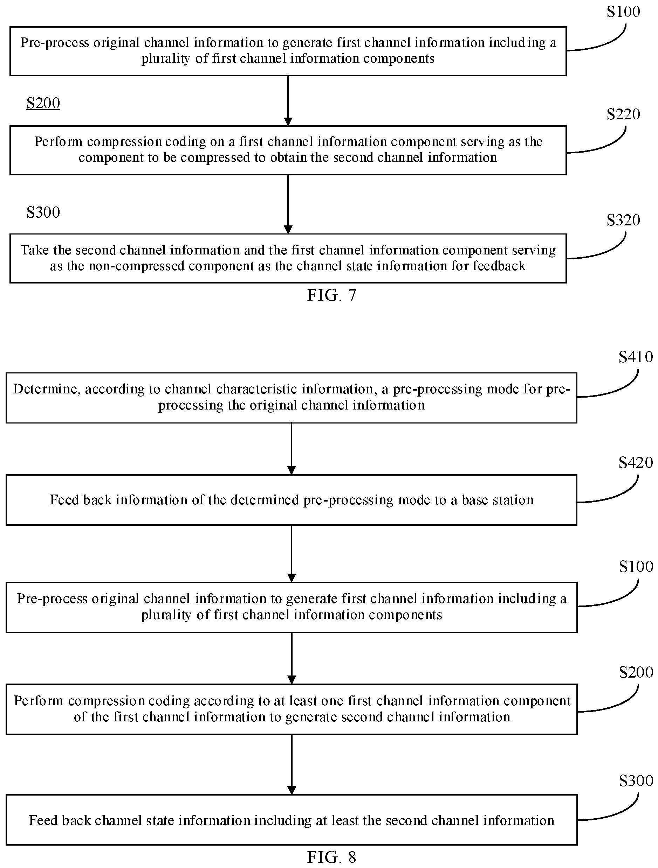

Accordingly, in some implementations, when compression coding is performed on part of first channel information components of the first channel information, the plurality of first channel information components of the first channel information include a component to be compressed and a non-compressed component. Referring to FIG. 7, the operation S200 includes operation S220, and the operation S300 includes operation S320.

At S220, performing compression coding on a first channel information component serving as the component to be compressed to obtain the second channel information.

At S320, taking the second channel information and the first channel information component serving as the non-compressed component as the channel state information for feedback.

In some implementations, according to information of at least one channel characteristic including a channel scene, channel angle spread, delay spread, Doppler spread, or the like, the terminal determines a pre-processing mode for obtaining the first channel information by pre-processing the original channel information, so that the overhead cost and the accuracy of the channel state information feedback can be balanced according to channel characteristics.

Accordingly, referring to FIG. 8, in some implementations, before the operation S 100, the method for processing channel state information further includes operations S410 and S420.

At S410, determining, according to channel characteristic information, a pre-processing mode for pre-processing the original channel information.

At S420, feeding back information of the determined pre-processing mode to a base station.

In the method for processing channel state information according to the embodiment of the present disclosure, the pre-processing mode may be the pre-processing mode as described in operations S 110 and S 120. For example, the pre-processing mode may include obtaining and stacking the real part matrix and the imaginary part matrix in operations S 111 and S 112, to generate first channel information; or obtaining and stacking the real part absolute value matrix, the real part symbol matrix, the imaginary part absolute value matrix and the imaginary part symbol matrix in operations S 113 to S 116, to generate first channel information; or obtaining and stacking the amplitude matrix and the phase matrix in operations S 117 and S 118, to generate the first channel information, which is not particularly limited herein.

It should be noted that by feeding back the determined pre-processing mode to the base station in operation S420, the base station can perform inverse processing according to an inverse processing mode corresponding to the pre-processing mode adopted by the terminal, to obtain the channel information. In some implementations, the base station can use the uplink channel information to assist the downlink channel information fed back by the terminal, and since the uplink channel and the downlink channel have partial reciprocity, the base station can more accurately obtain the downlink channel state, while saving part of the feedback overhead. Accordingly, by feeding back the determined pre-processing mode to the base station in operation S420, the base station can also pre-process the uplink channel information according to the same pre-processing mode, so that the uplink channel information can be used to assist the downlink channel information fed back by the terminal.

How to feed back information of the pre-processing mode to the base station is not particularly limited in the present disclosure. In some implementations, indexes of the plurality of pre-processing modes are pre-configured in the terminal, and after determining the pre-processing mode for pre-processing the original channel information, the terminal feeds back the index of the pre-processing mode to the base station, and the base station can determine the pre-processing mode selected by the terminal according to the index. In some implementations, the base station configures the indexes of the plurality of pre-processing modes, and the indexes of the plurality of pre-processing modes are configured to the terminal through physical layer signaling and/or higher-layer signaling.

How to feed back the information of the determined pre-processing mode by the terminal to the base station is not particularly limited in the present disclosure.

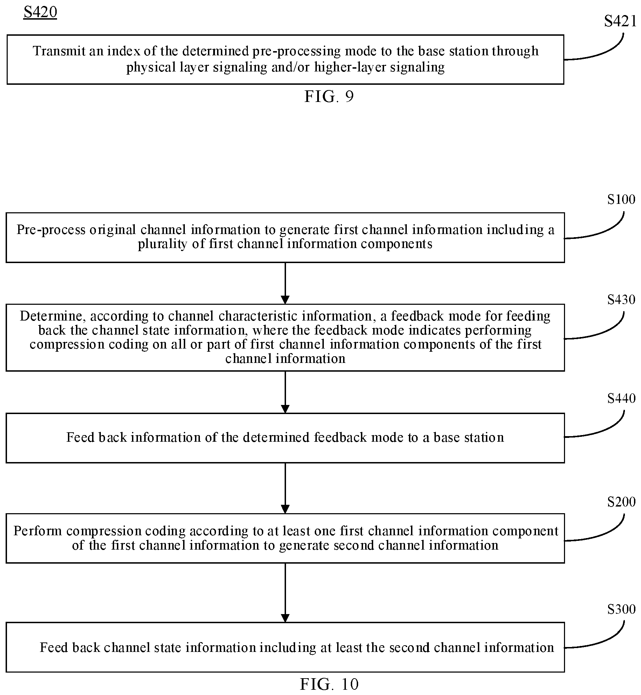

Accordingly, in some implementations, referring to FIG. 9, the operation S420 includes operation S421.

At S421, transmitting an index of the determined pre-processing mode to the base station through physical layer signaling and/or higher-layer signaling.

In some implementations, according to information of at least one channel characteristic including a channel scene, channel angle spread, delay spread, Doppler spread, or the like, the terminal determines a feedback mode for feeding back the channel state information, so that the overhead cost and the accuracy of the channel state information feedback can be balanced according to channel characteristics.

Accordingly, in some implementations, referring to FIG. 10, before the operation S200, the method for processing channel state information further includes operations S430 and S440.

At S430, determining, according to channel characteristic information, a feedback mode for feeding back the channel state information, where the feedback mode indicates performing compression coding on all first channel information components of the first channel information, or performing compression coding on part of first channel information components of the first channel information.

At S440, feeding back information of the determined feedback mode to a base station.

In some implementations, when the terminal determines to perform compression coding on part of first channel information components of the first channel information, it is further determined which part of the first channel information components is to be used as the component to be compressed. The information of the feedback mode fed back to the base station includes information indicating performing compression coding on part of first channel information components of the first channel information, and information of the component to be compressed, so that the base station can use uplink channel information in the same form as the second channel information to assist the downlink channel information. For example, the first channel information is formed by stacking an amplitude matrix and a phase matrix, and the auxiliary channel information obtained by pre-processing the uplink channel information at the base station is also formed by stacking an amplitude matrix and a phase matrix. When the terminal performs compression coding on only the amplitude matrix constituting the first channel information, the auxiliary channel information constituted by the amplitude matrix is used at the base station to assist the downlink channel information.

In some implementations, the indexes of the plurality of feedback modes are configured in the terminal, and the terminal feeds back the index of the determined feedback mode to the base station. In some implementations, the indexes of the plurality of feedback modes are configured by the base station and configured into the terminal through physical layer signaling and/or higher-layer signaling.

In some implementations, the terminal may determine the pre-processing mode and the feedback mode, respectively, and feed back the determined pre-processing mode and the determined feedback mode, respectively; or determine the pre-processing mode and the feedback mode simultaneously, and feed back the determined pre-processing mode and the determined feedback mode simultaneously, which is not particularly limited herein.

How to perform compression coding on at least one first channel information component of the first channel information is not particularly limited in the present disclosure. In some implementations, an encoder is configured by a neural network at the terminal to perform compression coding on at least one first channel information component of the first channel information; and a decoder corresponding to the encoder at the terminal is constructed by a neural network on the base station.

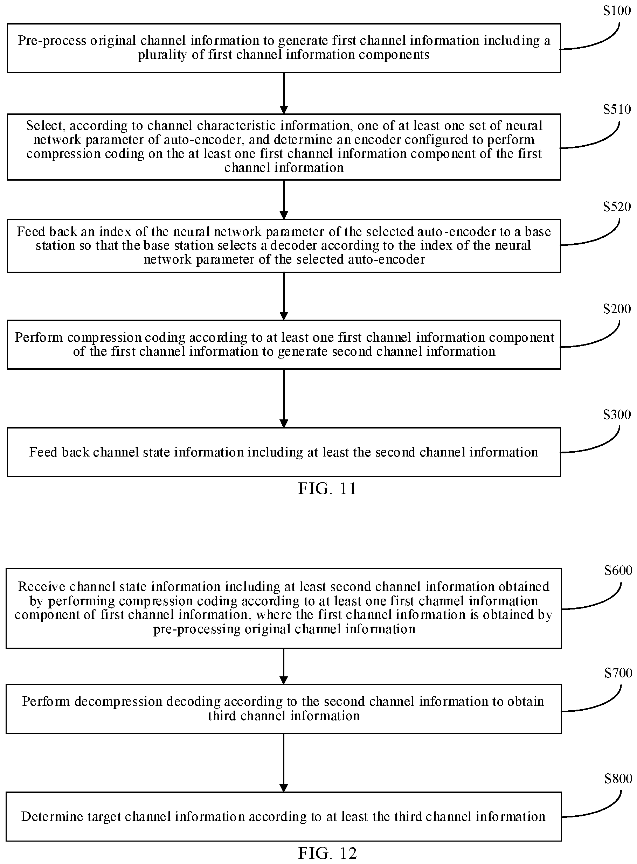

Accordingly, in some implementations, before the operation S200, referring to FIG. 11, the method for processing channel state information further includes operations S510 and S520.

At S510, selecting, according to channel characteristic information, one of at least one set of neural network parameter of pre-configured auto-encoder, and determining an encoder configured to perform compression coding on the at least one first channel information component of the first channel information.

At S520, feeding back an index of the neural network parameter of the selected auto-encoder to a base station so that the base station selects a decoder according to the index of the neural network parameter of the selected auto-encoder. Each auto-encoder includes a pair of encoder and decoder.

In some implementations, the neural network parameter includes at least one of a compression ratio, an activation function, a number of network layers, a network layer weight, a network layer bias, or a network layer weight normalization coefficient.

The structure of the encoder is not particularly limited in the present disclosure.

In some implementations, the encoder includes a first processing layer and a compression layer; the first processing layer includes a plurality of network layers each including a plurality of nodes, at least one network layer weight and an activation function, or the network layer further includes a network layer bias; the compression layer includes a fully-connected layer or at least one convolutional layer block, where the convolutional layer block includes a plurality of convolutional layers arranged in series and/or in parallel.

In some implementations, the original channel information includes any one of time domain channel information, frequency domain channel information, or pre-coded channel information.

In a second aspect, referring to FIG. 12, an embodiment of the present disclosure provides a method for processing channel state information, which includes the following operations S600 to S800.

At S600, receiving channel state information including at least second channel information obtained by performing compression coding according to at least one first channel information component of first channel information, where the first channel information is obtained by pre-processing original channel information.

At S700, performing decompression decoding according to the second channel information to obtain third channel information.

At S800, determining target channel information according to at least the third channel information.

The base station is not particularly limited in the present disclosure. For example, the base station may be any one of macro base station, micro base station, home base station, or pico base station.

It should be noted that in the method for processing channel state information according to the embodiment of the present disclosure, the original channel information is pre-processed at the terminal to obtain first channel information including a plurality of first channel information components, the terminal may perform compression coding on all first channel information components of the first channel information to obtain second channel information, and the second channel information is fed back to the base station; or the terminal may perform compression coding on part of first channel information components of the first channel information to obtain second channel information, and the second channel information and a part of the first channel information components, which are not subjected to compression coding, in the first channel information are fed back to the base station.

Accordingly, in the method for processing channel state information according to the embodiment of the present disclosure, through operations S600 to S800, the base station can receive and process channel state information fed back by the terminal and obtained by performing compression coding on all first channel information components of the first channel information, so as to obtain the target channel information and determine the channel state; or can receive and process channel state information fed back by the terminal and obtained by performing compression coding on part of first channel information components of the first channel information, so as to obtain the target channel information and determine the channel state.

It should be noted that in operation S800, determining the target channel information according to at least the third channel information includes: when the base station receives channel state information fed back by the terminal and obtained by performing compression coding on all first channel information components of the first channel information, determining the target channel information according to the third channel information; and when the base station receives channel state information fed back by the terminal and obtained by performing compression coding on part of first channel information components of the first channel information, determining the target channel information according to the third channel information and part of first channel information components of the first channel information, which are not subjected to compression coding, in the channel state information.

In some implementations, the target channel information obtained through operation S800 is original channel information. In some implementations, the target channel information obtained through operation S800 is an approximation or estimation of the original channel information. That is, the channel information reflecting the channel state is recovered at the base station.

In the method for processing channel state according to the embodiment of the present disclosure, channel state information fed back by the terminal and obtained by performing compression coding on all or part of first channel information components of the first channel information can be received and processed, so that the channel information reflecting the channel state is recovered and the channel state information feedback is completed, the compression coding on all first channel information components of the first channel information and compression coding on part of the first channel information components of the first channel information correspond to different overhead costs and accuracies of the channel state information feedback, respectively, so that the overhead cost and the accuracy are balanced when the channel state information is fed back, and the accuracy and the overhead cost of the channel state information feedback can be both effectively considered.

In some implementations, the base station can generate auxiliary channel information according to the uplink channel information, and use the auxiliary channel information to assist the downlink channel information fed back by the terminal, and since the uplink channel and the downlink channel have partial reciprocity, the base station can more accurately obtain the downlink channel state, while saving part of the feedback overhead.

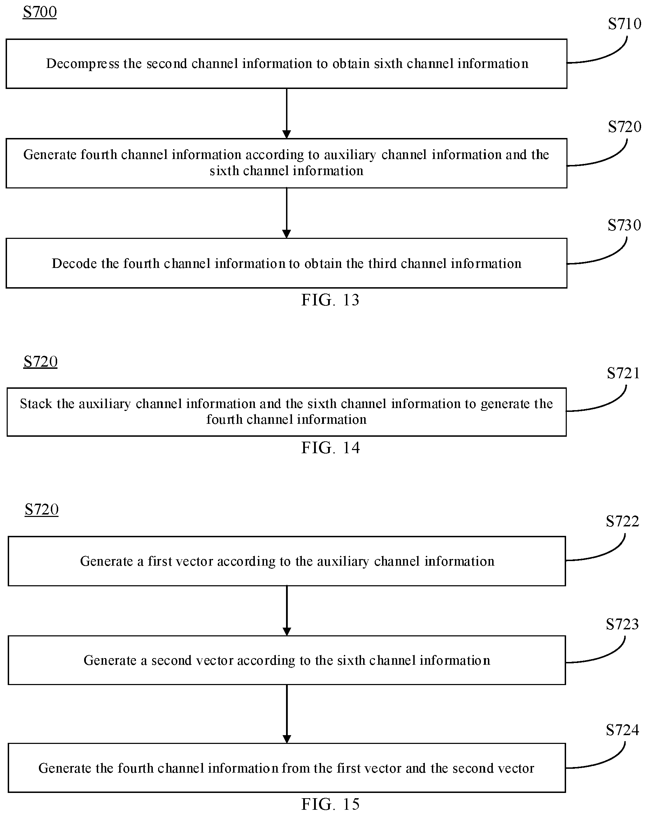

Accordingly, in some implementations, referring to FIG. 13, the operation S700 includes operations S710 to S730.

At S710, decompressing the second channel information to obtain sixth channel information.

At S720, generating fourth channel information according to auxiliary channel information and the sixth channel information.

At S730, decoding the fourth channel information to obtain the third channel information.

It should be noted that, in some implementations, at the terminal, the encoder configured to perform compression coding on at least one first channel information component of the first channel information includes a first processing layer and a compression layer, and at least one first channel information component of the first channel information is processed by the first processing layer and compressed by the compression layer to obtain the second channel information. A dimension of the sixth channel information obtained by decompressing the second channel information through operation S710 corresponds to a dimension of the channel information obtained by processing the at least one first channel information component through the first processing layer.

In the method for processing channel state information according to the embodiment of the present disclosure, the auxiliary channel information is obtained by pre-processing uplink channel information, and the uplink channel information is pre-processed in a pre-processing mode the same as the terminal pre-processing the original channel information. The auxiliary channel information and the second channel information are in the same form. For example, the first channel information at the terminal obtained by pre-processing the original channel information is constituted by a real part matrix and an imaginary part matrix, and the uplink channel information pre-processed at the base station is also constituted by a real part matrix and an imaginary part matrix. If the terminal performs compression coding on both the real part matrix and the imaginary part matrix to obtain second channel information, then auxiliary channel information is constituted by a real part matrix and an imaginary part matrix; and if the terminal performs compression coding on the real part matrix or the imaginary part matrix to obtain second channel information, then auxiliary channel information is constituted by a real part matrix or an imaginary part matrix.

How to generate the fourth channel information from the auxiliary channel information and the sixth channel information is not particularly limited in the present disclosure.

In some implementations, referring to FIG. 14, operation S720 includes operation S721.

At S721, stacking the auxiliary channel information and the sixth channel information to generate the fourth channel information.

For example, the terminal performs compression coding on all first channel information components of the first channel information to obtain second channel information and feeds back the second channel information, the sixth channel information obtained by decompressing the second channel information is in the form of a three-dimensional matrix with a size $N_t \times N_f \times C$, and the auxiliary channel information is also in the form of a three-dimensional matrix with a size $N_t \times N_f \times C$. The fourth channel information obtained by stacking the sixth channel information and the auxiliary channel information is in the form of a three-dimensional matrix with a size $N_t \times N_f \times 2C$.

For example, the terminal performs compression coding on part of first channel information components of the first channel information to obtain second channel information and feeds back the second channel information, the sixth channel information obtained by decompressing the second channel information is in the form of a matrix with a size $N_t \times N_f \times 1$, and the auxiliary channel information is also in the form of a matrix with a size $N_t \times N_f \times 1$. The fourth channel information obtained by stacking the sixth channel information and the auxiliary channel information is in the form of a three-dimensional matrix with a size $N_t \times N_f \times 2$.

In some implementations, referring to FIG. 15, the operation S720 includes operations S722 to S724.

At S722, generating a first vector according to the auxiliary channel information.

At S723, generating a second vector according to the sixth channel information.

At S724, generating the fourth channel information from the first vector and the second vector.

In some implementations, stacking the first vector and the second vector end to end to generate fourth channel information in the form of a vector.

For example, the terminal performs compression coding on all first channel information components of the first channel information to obtain second channel information and feeds back the second channel information, the sixth channel information obtained by decompressing the second channel information is in the form of a three-dimensional matrix with a size $N_t \times N_f \times C$, and the auxiliary channel information is also in the form of a three-dimensional matrix with a size $N_t \times N_f \times C$. The first vector generated according to the auxiliary channel information and the second vector generated according to the sixth channel information, each have a size $L_1 \times 1$ and $L_1 = N_t \times N_f \times C$. The obtained fourth channel information is in the form of a vector with a size $2L_1 \times 1$.

For example, the terminal performs compression coding on part of first channel information components of the first channel information to obtain second channel information and feeds back the second channel information, the sixth channel information obtained by decompressing the second channel information is in the form of a matrix with a size $N_t \times N_f \times 1$, and the auxiliary channel information is also in the form of a matrix with a size $N_t \times N_f \times 1$. The first vector generated according to the auxiliary channel information and the second vector generated according to the sixth channel information, each have a size $L_2 \times 1$ and $L_2 = N_t \times N_f \times 1$. The obtained fourth channel information is in the form of a vector with a size $2L_2 \times 1$.

In some implementations, the first vector and the second vector are superimposed end to end to generate a third vector, and the third vector is reconstructed into the fourth channel information in the form of a matrix.

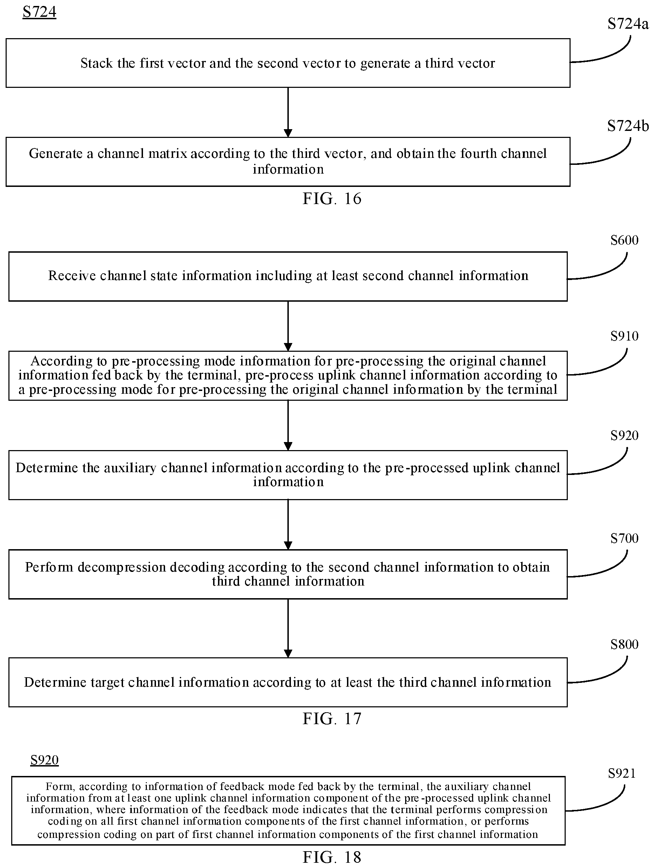

Accordingly, in some implementations, referring to FIG. 16, the operation S724 includes operations S724a and S724b.

At S724a, stacking the first vector and the second vector to generate a third vector.

At S724b, generating a channel matrix according to the third vector, and obtaining the fourth channel information.

In the method for processing channel state information according to the embodiment of the present disclosure, the third vector is reconstructed into a channel matrix to obtain the fourth channel information in the form of a matrix, which can facilitate extraction of the characteristics of the channel information.

For example, the terminal performs compression coding on all first channel information components of the first channel information to obtain second channel information and feeds back the second channel information, the sixth channel information obtained by decompressing the second channel information is in the form of a three-dimensional matrix with a size $N_t \times N_f \times C$, and the auxiliary channel information is also in the form of a three-dimensional matrix with a size $N_t \times N_f \times C$. The first vector generated according to the auxiliary channel information and the second vector generated according to the sixth channel information, each have a size $L_1 \times 1$, and $L_1 = N_t \times N_f \times C$, and the first vector and the second vector are stacked end to end to obtain a third vector with a size $2L_1 \times 1$. The third vector is reconstructed into a channel matrix with a size $N_t \times N_f \times 2C$, thereby obtaining the fourth channel information in the form of a matrix.

For example, the terminal performs compression coding on part of first channel information components of the first channel information to obtain second channel information and feeds back the second channel information, the sixth channel information obtained by decompressing the second channel information is in the form of a matrix with a size $N_t$

$\times N_f \times 1$, and the auxiliary channel information is also in the form of a matrix with a size $N_t \times N_f \times 1$. The first vector generated according to the auxiliary channel information and the second vector generated according to the sixth channel information, each have a size $L_2 \times 1$ and $L_2 = N_t \times N_f \times 1$, and the first vector and the second vector are stacked end to end obtain a third vector with a size $2L_2 \times 1$. The third vector is reconstructed into a channel matrix with a size $N_t \times N_f \times 2$, thereby obtaining the fourth channel information in the form of a matrix.

In some implementations, the terminal feeds back, to the base station, information of the pre-processing mode for pre-processing the original channel information through physical layer signaling and/or higher-layer signaling, so that the base station processes the uplink channel information in the same pre-processing mode, and further obtains the auxiliary channel information in the same form as the second channel information, so that the uplink channel information can be used to assist the downlink channel information fed back by the terminal.

Accordingly, in some implementations, referring to FIG. 17, before the operation S700, the method for processing channel state information further includes S910 and S920.

At S910, according to pre-processing mode information for pre-processing the original channel information fed back by the terminal, pre-processing uplink channel information according to a pre-processing mode for pre-processing the original channel information by the terminal.

At S920, determining the auxiliary channel information according to the pre-processed uplink channel information.

It should be noted that the uplink channel information is pre-processed at the base station in a pre-processing mode the same as the terminal pre-processing the original channel information, which may include obtaining and stacking a real part matrix and an imaginary part matrix according to the uplink channel information; or obtaining and stacking a real part absolute value matrix, a real part symbol matrix, an imaginary part absolute value matrix and an imaginary part symbol matrix according to the uplink channel information; or obtaining and stacking an amplitude matrix and a phase matrix according to the uplink channel information, to generate auxiliary channel information, which is not particularly limited herein.

In some implementations, the terminal feeds back, to the base station, information of the feedback mode through physical layer signaling and/or higher-layer signaling, and according to the information of the feedback mode, the base station obtains auxiliary channel information in the same form as the second channel information according to the pre-processed uplink channel information.

Accordingly, in some implementations, referring to FIG. 18, the operation S920 includes operation S921.

At S921, forming, according to information of feedback mode fed back by the terminal, the auxiliary channel information from at least one uplink channel information component of the pre-processed uplink channel information, where information of the feedback mode indicates that the terminal performs compression coding on all first channel information components of the first channel information, or performs compression coding on part of first channel information components of the first channel information.

It should be noted that uplink channel information components of the pre-processed uplink channel information corresponding to the auxiliary channel information are consistent with the first channel information components of the first channel information corresponding to the second channel information. For example, if the terminal performs compression coding on both the real part matrix and the imaginary part matrix of the first channel information to obtain second channel information, the auxiliary channel information is constituted by the real part matrix and the imaginary part matrix of the pre-processed uplink channel information; and if the terminal performs compression coding on the real part matrix or the imaginary part matrix of the first channel information to obtain second channel information, the auxiliary channel information is constituted by the real part matrix or the imaginary part matrix of the pre-processed uplink channel information.

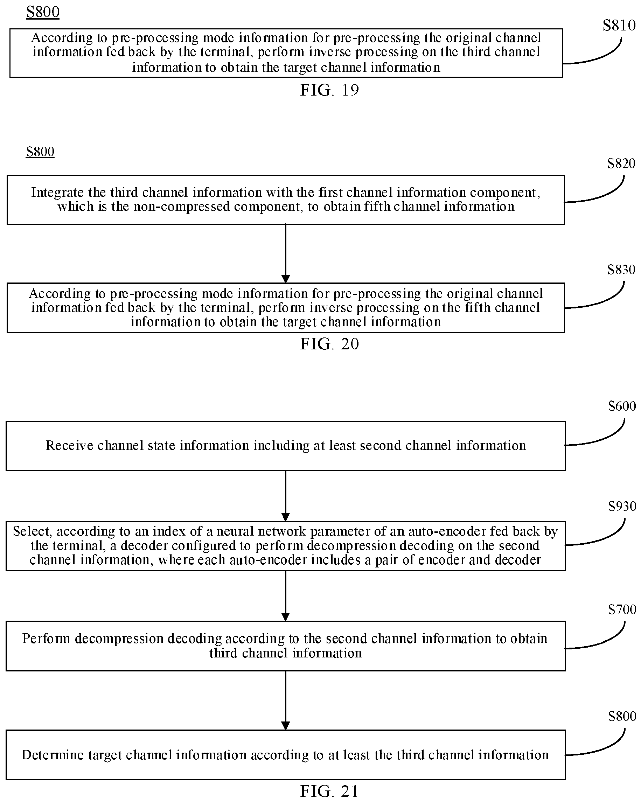

In some implementations, referring to FIG. 19, the terminal performs compression coding on all first channel information components of the first channel information to obtain second channel information, and the channel state information includes the second channel information. The operation S800 includes operation S810.

At S810, according to pre-processing mode information for pre-processing the original channel information fed back by the terminal, performing inverse processing on the third channel information to obtain the target channel information.

The third channel information is subjected to inverse processing in operation S810 in an inverse processing mode corresponding to the pre-processing mode for pre-processing the original channel information at the terminal. For example, the pre-processing mode at the terminal may include obtaining and stacking a real part matrix and an imaginary part matrix according to the original channel information, then the third channel information obtained at the base station is in the form of a real part matrix and an imaginary part matrix in a stack, and the inverse processing mode includes obtaining target channel information in the form of a complex matrix according to the real part matrix and the imaginary part matrix. For example, the pre-processing mode at the terminal may include obtaining and stacking a real part absolute value matrix, a real part symbol matrix, an imaginary part absolute value matrix and an imaginary part symbol matrix according to the original channel information, then the third channel information obtained at the base station is in the form of a real part absolute value matrix, a real part symbol matrix, an imaginary part absolute value matrix and an imaginary part symbol matrix in a stack, and the inverse processing mode includes obtaining target channel information in the form of a complex matrix according to the real part absolute value matrix, the real part symbol matrix, the imaginary part absolute value matrix and the imaginary part symbol matrix. For example, the pre-processing mode at the terminal may include obtaining and stacking an amplitude matrix and a phase matrix according to the original channel information, then the third channel information obtained at the base station is in the form of an amplitude matrix and a phase matrix in a stack, and the inverse processing mode includes obtaining target channel information in the form of a complex matrix according to the amplitude matrix and the phase matrix.

In some implementations, referring to FIG. 20, the terminal performs compression coding on part of first channel information components of the first channel information to obtain second channel information and feeds back the second channel information; the plurality of first channel information components of the first channel information include a non-compressed component and a component to be compressed; the second channel information is obtained by performing compression coding on the first channel information component serving as the component to be compressed; and the channel state information includes the second channel information and the first channel information component serving as the non-compressed component. The operation S800 includes operations S820 and S830.

At S820, integrating the third channel information with the first channel information component, which is the non-compressed component, to obtain fifth channel information.

At S830, according to pre-processing mode information for pre-processing the original channel information fed back by the terminal, performing inverse processing on the fifth channel information to obtain the target channel information.

In some implementations, an encoder is configured by a neural network at the terminal to perform compression coding on at least one first channel information component of the first channel information; and a decoder corresponding to the encoder at the terminal is constructed by a neural network on the base station to perform decompression decoding.

Accordingly, in some implementations, referring to FIG. 21, before the operation S700, the method for processing channel state information further includes operation S930.

At S930, selecting, according to an index of a neural network parameter of an auto-encoder fed back by the terminal, a decoder configured to perform decompression decoding on the second channel information, where each auto-encoder includes a pair of encoder and decoder.

In some implementations, the neural network parameter includes at least one of a compression ratio, an activation function, a number of network layers, a network layer weight, a network layer bias, or a network layer weight normalization coefficient.

In some implementations, the decoder includes a second processing layer and a decompression layer; the second processing layer includes a plurality of network layers each including a plurality of nodes, at least one network layer weight and an activation function, or the network layer further includes a network layer bias; the decompression layer includes a fully-connected layer or at least one deconvolutional layer block, where the deconvolutional layer block includes a plurality of deconvolutional layers arranged in series and/or in parallel.

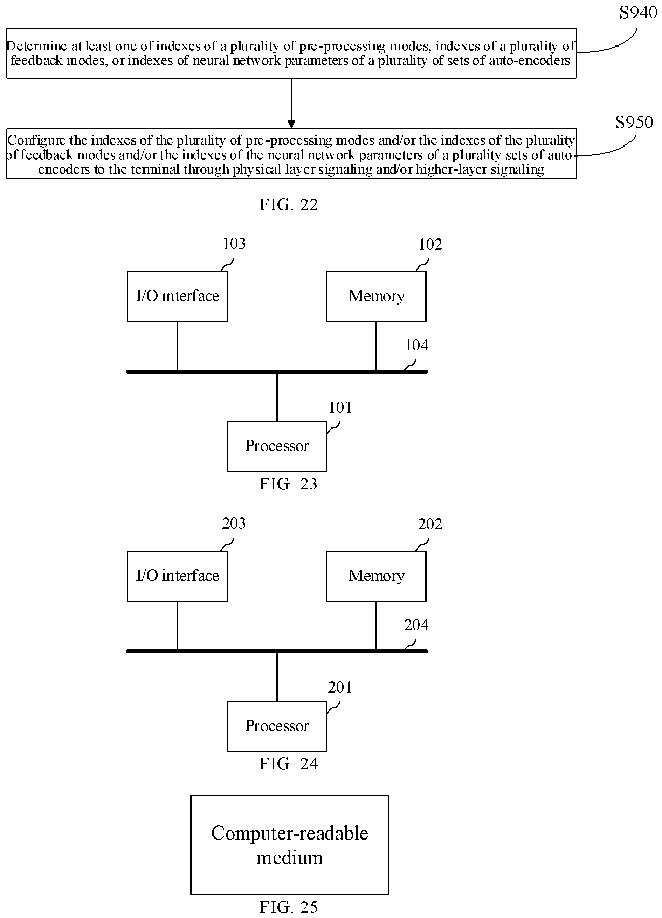

In some implementations, referring to FIG. 22, the method for processing channel state information further includes operations S940 and S950.

At S940, determining at least one of indexes of a plurality of pre-processing modes, indexes of a plurality of feedback modes, or indexes of neural network parameters of a plurality of sets of auto-encoders.

At S950, configuring the indexes of the plurality of pre-processing modes and/or the indexes of the plurality of feedback modes and/or the indexes of the neural network parameters of a plurality sets of auto-encoders to the terminal through physical layer signaling and/or higher-layer signaling.

In a third aspect, referring to FIG. 23, an embodiment of the present disclosure provides a terminal, including: at least one processor 101 (merely one is shown in FIG. 23); a memory 102 having at least one computer program stored thereon which, when executed by the at least one processor 101, causes the at least one processor 101 to implement the method for processing channel state information according to any embodiment of the present disclosure in the first aspect; and at least one I/O interface 103 connected between the processor 101 and the memory 102 and configured to enable information interaction between the processor 101 and the memory 102.

The processor 101 is a device with a data processing capability, including but not limited to a central processing unit (CPU), or the like. The memory 102 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 103 is connected between the processor 101 and the memory 102 to enable information interaction between the processor 101 and the memory 102, and includes, but is not limited to, a bus or the like.

In some implementations, the processor 101, the memory 102, and the I/O interface 103 are interconnected via a bus 104, and further connected to other components of a computing device.

In a fourth aspect, referring to FIG. 24, an embodiment of the present disclosure provides a base station, including: at least one processor 201 (merely one is shown in FIG. 24); a memory 202 having at least one computer program stored thereon which, when executed by the at least one processor 201, causes the at least one processor 201 to implement the method for processing channel state information according to any embodiment of the present disclosure in the second aspect; and at least one I/O interface 203 connected between the at least one processor 201 and the memory 202 and configured to enable information interaction between the processor 201 and the memory 202.

The processor 201 is a device with a data processing capability, including but not limited to a central processing unit (CPU), or the like. The memory 202 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 203 is connected between the processor 201 and the memory 202 to enable information interaction between the processor 201 and the memory 202, and includes, but is not limited to, a bus or the like.

In some implementations, the processor 201, the memory 202, and the I/O interface 203 are interconnected via a bus 204, and further connected to other components of a computing device.

In a fifth aspect, referring to FIG. 25, an embodiment of the present disclosure provides a computer-readable storage medium storing a computer program thereon which, when executed by a processor, causes the processor to implement at least one of: the method for processing channel state information according to any embodiment of the present disclosure in the first aspect; or the method for processing channel state information according to any embodiment of the present disclosure in the second aspect.

To improve understanding of the technical solution provided in the embodiments of the present disclosure for those skilled in the art, the technical solution provided in the embodiments of the present disclosure will be further described in detail below with the help of specific examples.

Example I

This example is used to illustrate the original channel information form.

A terminal receives a reference signal, such as a channel state information reference signal, to obtain original channel information H, which is generally a complex matrix $N_{tx} \times N_{rx}$, where $N_{tx}$ and $N_{rx}$ represent the number of transmitting antennas at the base station and the number of receiving antennas at the terminal, respectively. In this example, the antennas may be logical antennas or various types of physical antennas. The original channel information H may be time domain channel information $H_t$ constituted by complex matrix units, or may be frequency domain channel information $H_f$ which is also constituted by complex matrix units.

In some implementations, the time domain channel information $H_t$ is a complex matrix of $N_t \times N_s$, where $N_t$ is the number of antennas, and $N_s$ is the number of time domain sampling points. In an antenna dimension, the number of antennas $N_t$ is $N_{tx} \times N_{rx}$, where $N_{tx}$ represents the number of transmitting antennas, and $N_{rx}$ represents the number of receiving antennas. The number of antennas $N_t$ may also be $N_{tx} \times R$, where $N_{tx}$ represents the number of transmitting antennas, and R is the channel rank or the number of data streams. Due to sparsity of the time domain channel, a smaller channel value can be discarded on the dimension of the time domain sampling points, that is, the time domain sampling points can be truncated, and then the time domain channel information $H_t$ has a size $N_t \times N'_s$, where $N'_s < N_s$. The antenna dimension $N_t$ may be in both the first dimension and the second dimension. That is, the time domain channel information $H_t$ may have a size $N'_s \times N_t$.

In some implementations, the frequency domain channel information $H_f$ is a complex matrix of $N_t \times N_f$, where $N_t$ is the number of antennas, $N_f$ is the frequency domain granularity, and the frequency domain granularity may be in units of subcarriers or physical resource blocks (PRBs) or subbands. One physical resource block may include a plurality of subcarriers, such as 6, 12 or the like, and one subband includes a plurality of physical resource blocks. In the antenna dimension, the number of antennas $N_t$ is $N_{tx} \times N_{rx}$, where $N_{tx}$ represents the number of transmitting antennas, and $N_{rx}$ represents the number of receiving antennas. The number of antennas $N_t$ may also be $N_{tx} \times R$, where $N_{tx}$ represents the number of transmitting antennas, and R is the channel rank or the number of data streams. Since the frequency domain granularity may be obtained by performing fast Fourier transform on time domain sampling points, which may be truncated in the frequency domain granularity dimension, and then the time-frequency domain channel information

$H_f$ has a size $N_t \times N'_f$ and $N'_f < N_f$. The antenna dimension $N_t$ may be in both the first dimension and the second dimension. That is, the frequency domain channel information $H_f$ may also have a size $N'_f \times N_t$.

In some implementations, the frequency domain channel information $H_f$ may be precoded channel information. On the subband frequency domain granularity $N_f$, there are M PRB frequency band resources, channels of every continuous K PRBs form one subband channel matrix, and the value of K is determined according to a bandwidth indicator. For example, each subband includes 4 PRBs at a bandwidth of 10M, each subband includes 8 PRBs at a bandwidth of 20M, so on and so forth. The K channels $H_1...H_K$ in each subband are multiplied by their conjugate matrix $H_1{}^H ...H_K{}^H$ to obtain K correlation matrixes $R_1...R_K$, which are then averaged and subjected to singular value decomposition (SVD), and an eigenvector corresponding to the maximum eigenvalue is taken as an eigenvector $V_i$ of the subband, where $i$ =1...$N_f$. The eigenvectors of all subbands are stacked together to form precoding V, a matrix of which has a size $N_t \times N_f$, where $N_t$ is the number of antennas, and $N_f$ is the number of subbands. The antenna dimension $N_t$ may be in both the first dimension and the second dimension. That is, the precoding $Y$ matrix may have a size $N_f \times N_t$.

Example II

This example is used to illustrate the pre-processing of original channel information.

The original channel information H has to be pre-processed after being obtained, and in this example, the original channel information is assumed to be a two-dimensional complex matrix with a size $N_t \times N_f$.

In some implementations, according to the real and imaginary parts of the complex numbers, the original channel information H is split into a three-dimensional real matrix with a size $N_t \times N_f \times C$, where $C$ is the channel dimension, which is generally 2, and 2 represents the real part and imaginary part of the complex numbers in the channel information. It should be noted that the channel dimension $C$ may be in both the third dimension and the first dimension. That is, the original channel information H may have a size $C \times N_t \times N_f$. For example, assuming the original channel

$$H = \begin{bmatrix} a_{11}+b_{11}i & a_{12}+b_{12}i & \cdots & a_{1N_f}+b_{1N_f}i \\ a_{21}+b_{21}i & a_{22}+b_{22}i & \cdots & a_{2N_f}+b_{2N_f}i \\ \vdots & \vdots & \ddots & \vdots \\ a_{N_t1}+b_{N_t1}i & a_{N_t2}+b_{N_t2}i & \cdots & a_{N_tN_f}+b_{N_tN_f}i \end{bmatrix}$$

information , where, the real parts of respective elements

$$H_R = \begin{bmatrix} a_{11} & a_{12} & \cdots & a_{1N_f} \\ a_{21} & a_{22} & \cdots & a_{2N_f} \\ \vdots & \vdots & \ddots & \vdots \\ a_{N_t1} & a_{N_t2} & \cdots & a_{N_tN_f} \end{bmatrix}$$

are extracted to form a real part matrix , where the imaginary parts of respective

$$H_I = \begin{bmatrix} b_{11} & b_{12} & \cdots & b_{1N_f} \\ b_{21} & b_{22} & \cdots & b_{2N_f} \\ \vdots & \vdots & \ddots & \vdots \\ b_{N_t1} & b_{N_t2} & \cdots & b_{N_tN_f} \end{bmatrix}$$

elements are extracted to form an imaginary part matrix , where $H=H_R+iH_I$. The extracted real part matrix and imaginary part matrix are stacked to form a three-dimensional channel matrix H' with a size $N_t \times N_f \times 2$, and the three-dimensional channel matrix H' = [$H_R$;$H_I$], thereby generating the first channel information.

In some implementations, according to absolute values and symbols of the real and imaginary parts of the complex numbers, the original channel information H is split into a three-dimensional real matrix with a size $N_t \times N_f \times C$, where $C$ is a channel dimension which is generally equal to 4, and 4 represents absolute values and symbols of the real and imaginary parts of the complex numbers in the channel information. It should be noted that the channel dimension $C$ may be in both the third dimension and the first dimension. That is, the original channel information H may also have a size $C \times N_t \times N_f$.

For example, assuming the original channel information,

$$H = \begin{bmatrix} a_{11}+b_{11}i & \bar{a}_{12}+b_{12}i & \cdots & \bar{a}_{1N_f}+b_{1N_f}i \\ a_{21}+b_{21}i & a_{22}+b_{22}i & \cdots & a_{2N_f}+b_{2N_f}i \\ \vdots & \vdots & \ddots & \vdots \\ a_{N_t1}+b_{N_t1}i & a_{N_t2}+b_{N_t2}i & \cdots & a_{N_tN_f}+b_{N_tN_f}i \end{bmatrix}$$

, absolute values of the real parts of respective elements

$$H_{R_{abs}} = \begin{bmatrix} |a_{11}| & |a_{12}| & \cdots & |a_{1N_f}| \\ |a_{21}| & |a_{22}| & \cdots & |a_{2N_f}| \\ \vdots & \vdots & \ddots & \vdots \\ |a_{N_t1}| & |a_{N_t2}| & \cdots & |a_{N_tN_f}| \end{bmatrix}$$

are extracted to form a real part absolute value matrix , absolute values of the imaginary part of respective elements are extracted to form an imaginary part absolute value matrix,

$$H_{I_{abs}} = \begin{bmatrix} |b_{11}| & |b_{12}| & \cdots & |b_{1N_f}| \\ |b_{21}| & |b_{22}| & \cdots & |b_{2N_f}| \\ \vdots & \vdots & \ddots & \vdots \\ |b_{N_t1}| & |b_{N_t2}| & \cdots & |b_{N_tN_f}| \end{bmatrix}$$

, symbols of the real parts of respective elements are extracted to form a real

$$H_{R_{sign}} = \begin{bmatrix} sign(a_{11}) & sign(a_{12}) & \cdots & sign(a_{1N_f}) \\ sign(a_{21}) & sign(a_{22}) & \cdots & sign(a_{2N_f}) \\ \vdots & \vdots & \ddots & \vdots \\ sign(a_{N_t1}) & sign(a_{N_t2}) & \cdots & sign(a_{N_tN_f}) \end{bmatrix}$$

part symbol matrix , and, symbols of the imaginary part of respective elements are extracted to form an imaginary part symbol matrix

$$H_{I_{sign}} = \begin{bmatrix} sign(b_{11}) & sign(b_{12}) & \cdots & sign(b_{1N_f}) \\ sign(b_{21}) & sign(b_{22}) & \cdots & sign(b_{2N_f}) \\ \vdots & \vdots & \ddots & \vdots \\ sign(b_{N_t1}) & sign(b_{N_t2}) & \cdots & sign(b_{N_tN_f}) \end{bmatrix}$$

, where $\mathbf{H} = \mathbf{H}_{R_{sign}} \otimes \mathbf{H}_{R_{abs}} + i\mathbf{H}_{I_{sign}} \otimes \mathbf{H}_{I_{abs}}$, and $\otimes$ means multiplying corresponding elements in the matrix. The extracted absolute value matrix and symbol matrix are stacked to form a three-dimensional channel matrix H' with a size $N_t \times N_f \times 4$ , and the three-dimensional channel matrix H' = [$H_{R_{abs}}$ ; $H_{I_{abs}}$ ; $H_{R_{sign}}$; $H_{I_{sign}}$ ], thereby generating the first channel information.

In some implementations, according to the amplitude and phase of the complex numbers, the original channel information H is split into a three-dimensional real matrix with a size $N_t \times N_f \times C$, where C is a channel dimension which is generally equal to 2, and 2 represents the amplitude and phase of the complex numbers in the channel information. It should be noted that the channel dimension $C$ may be in both the third dimension and the first dimension. That is, the original channel information H may have a size $C \times N_t \times N_f$. For example, assuming the original channel information

$$H = \begin{bmatrix} a_{11}+b_{11}i & a_{12}+b_{12}i & \cdots & a_{1N_f}+b_{1N_f}i \\ a_{21}+b_{21}i & a_{22}+b_{22}i & \cdots & a_{2N_f}+b_{2N_f}i \\ \vdots & \vdots & \ddots & \vdots \\ a_{N_t1}+b_{N_t1}i & a_{N_t2}+b_{N_t2}i & \cdots & a_{N_tN_f}+b_{N_tN_f}i \end{bmatrix}$$

, the amplitudes of respective elements are extracted to form an amplitude matrix

$$A = \begin{bmatrix} \sqrt{a_{11}^2 + b_{11}^2} & \sqrt{a_{12}^2 + b_{12}^2} & \cdots & \sqrt{a_{1N_f}^2 + b_{1N_f}^2} \\ \sqrt{a_{21}^2 + b_{21}^2} & \sqrt{a_{22}^2 + b_{22}^2} & \cdots & \sqrt{a_{2N_f}^2 + b_{2N_f}^2} \\ \vdots & \vdots & \ddots & \vdots \\ \sqrt{a_{N_t1}^2 + b_{N_t1}^2} & \sqrt{a_{N_t2}^2 + b_{N_t2}^2} & \cdots & \sqrt{a_{N_tN_f}^2 + b_{N_tN_f}^2} \end{bmatrix}$$

, the phases of respective

$$\Phi = \begin{bmatrix} \arctan\frac{b_{11}}{a_{11}} & \arctan\frac{b_{12}}{a_{12}} & \cdots & \arctan\frac{b_{1N_f}}{a_{1N_f}} \\ \arctan\frac{b_{21}}{a_{21}} & \arctan\frac{b_{22}}{a_{22}} & \cdots & \arctan\frac{b_{2N_f}}{a_{2N_f}} \\ \vdots & \vdots & \ddots & \vdots \\ \arctan\frac{b_{N_t1}}{a_{N_t1}} & \arctan\frac{b_{N_t2}}{a_{N_t2}} & \cdots & \arctan\frac{b_{N_tN_f}}{a_{N_tN_f}} \end{bmatrix}$$

, and H =

elements are extracted to form a phase matrix

$Ae^{i\Phi}$. The extracted amplitude matrix and phase matrix are stacked to form a three-dimensional channel matrix H' with a size $N_t \times N_f \times 2$, and the three-dimensional channel matrix **H' = [A;Φ]**, thereby generating the first channel information.

Example III

This example is used to illustrate how to obtain a pre-processing mode and a feedback mode of the first channel information.

In use, the base station configures indexes of I sets of pre-processing modes through higher-layer signaling according to the channel condition, so that the terminal receives the indexes of the I sets of pre-processing modes, and thereby knows which set of pre-processing mode is to be used. That is, the base station configures indexes of pre-processing modes, and the terminal receives the indexes of the pre-processing modes, thereby determining a pre-processing mode for pre-processing the original channel information. The terminal selects one pre-processing mode according to at least one factor, such as a scene of channel, angle spread, delay spread, or Doppler spread of channel, or the like, and transmits an index of the selected pre-processing mode to the base station through physical layer signaling and/or higher-layer signaling. The base station obtains the corresponding pre-processing mode through the index of the pre-processing mode fed back by the terminal, and pre-processes uplink channel information for assisting downlink channel information in the same pre-processing mode. If only one set of pre-processing mode is configured, i.e., 1= 1, then an index 0 is fed back to the terminal.

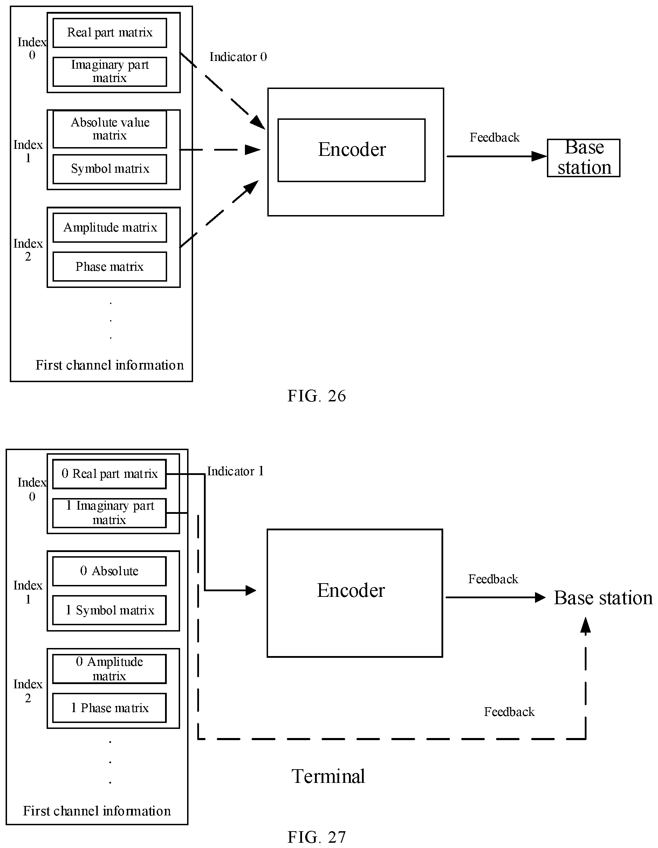

After obtaining the first channel information, the terminal selects one feedback mode of the first channel information according to at least one factor, such as a scene of channel, angle spread, delay spread, or Doppler spread of channel, or the like, and transmits an indicator of the selected feedback mode to the base station through physical layer signaling and/or higher-layer signaling. The feedback mode includes feeding back the pre-processed first channel information completely or partially to the encoder for processing to obtain second channel information. For example, when the indicator is 0, the pre-processed first channel information is completely fed back, and when the indicator is 1, the pre-processed first channel information is partially fed back. When the indicator 0, i.e., complete feedback, is selected, all the first channel information is sent to the encoder for processing to obtain second channel information which is fed back to the base station, as shown in FIG. 26. When the indicator 1, i.e., partial feedback, is selected, a certain part of the first channel information obtained by pre-processing by the selected pre-processing mode is sent to the encoder for processing to generate second channel information, while an index of the partial information is fed back to the base station so that the base station may use it as a reference to select the corresponding auxiliary uplink channel partial information. Meanwhile, the terminal feed backs the other part of channel information obtained by pre-processing by the selected pre-processing mode to the base station to generate third channel information, as shown in FIG. 27.

Example IV

This example is used to illustrate construction of an encoder and a decoder in a neural network.

The artificial intelligence can be realized by means of a deep learning neural network. Here, the neural network is an auto-encoder including an encoder and a decoder. The encoder is located at a terminal, and the decoder is located at a base station. In this example, the terminal may include various mobile devices, such as a mobile phone, a data card, a laptop, or various manufacturing devices of a factory. The base station includes various base stations such as macro, micro, home, or pico base stations.

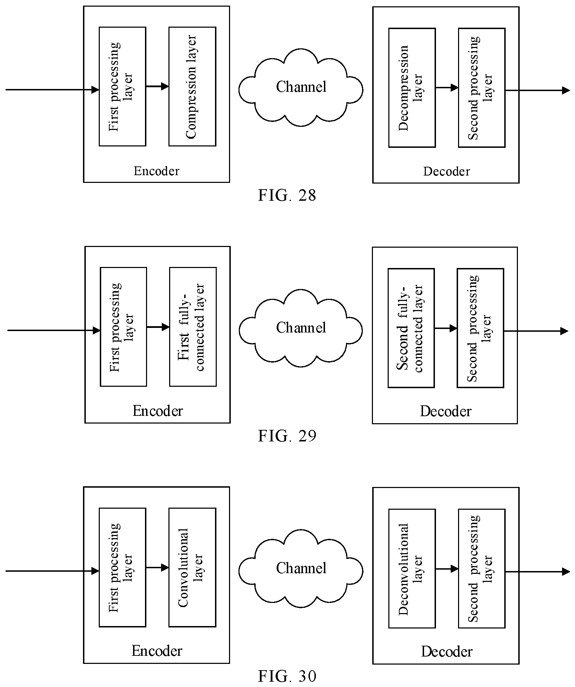

As shown in FIG. 28, the terminal inputs the pre-processed first channel information into an encoder including a first processing layer and a compression layer. The first processing layer is a sub-neural network including P network layers, an $i^{th}$ layer includes $L_{e,i}$ nodes, including at least one network layer weight $W_{e,i}$, 0 to 1 network layer bias $b_{e,i}$, and an activation function $A_{e,i}$ where $i = 1...P$. The $i^{th}$ layer may be a convolutional layer, or may be a fully-connected layer, a pooling layer, a directly-connected layer, or any combination of the above three layers, or a residual network block composed of several convolutional layers. The compression layer may be a fully-connected layer, C1 convolutional layers, or a recurrent network, such as a long short-term memory network (LSTM), or a gated recurrent neural network (GRU). At the base station, there is a decoder corresponding to the encoder, the decoder includes a decompression layer and a second processing layer. The second processing layer includes Q network layers, and a $j^{th}$ layer includes $L_{d,j}$ nodes, including at least one network layer weight $W_{d,j}$, 0 to 1 network layer bias $b_{d,j}$, and an activation function $S_{d,j}$, where $j = 1...Q$. The $j^{th}$ layer may be a convolutional layer, a pooling layer, a directly-connected layer, or any combination of the above three layers, or a residual network block composed of several convolutional layers. The decompression layer may be a fully-connected layer, C2 convolutional layers, or an LSTM or GRU. For example, the terminal inputs all the pre-processed first channel information to the encoder, and the encoder outputs and transmits second channel information to the base station. Alternatively, the second channel information is transmitted to the base station after quantization, encoding, and modulation. The base station receives the second channel information, or uses the second channel information as input of the decoder after dequantization, demodulation and decoding. The decoder outputs third channel information, the input data of the compression layer includes X elements, while the output data thereof includes Y elements, where a ratio of Y to X is called a compression ratio. For example, X is 2048 and Y is 64, so the compression ratio is 64/2048 = 1/32, i.e., the compression ratio is 1/32.

Example V

This example is used to illustrate how to obtain parameters of the neural network.

Through offline training or a process combining offline training and online training, neural network parameters of K0 sets of auto-encoders are obtained, where each auto-encoder includes a pair of encoder and decoder. Further, the terminal and the base station respectively store neural network parameters of K0 sets of encoders and decoders. In use, the base station configures indexes of the K0 sets of encoders and decoders through higher-layer signaling according to the channel condition, so that the terminal knows from which the parameter set of the encoder is used upon receiving the index. In other words, the base station configures indexes of the pairs of encoders and decoders, while the terminal receives an index of one of the pairs of encoders and decoders and determines parameter corresponding to the encoder. The terminal selects one encoder according to at least one factor, such as a scene of channel, angle spread, delay spread, or Doppler spread of channel, or the like, and transmits an index of the selected encoder to the base station through physical layer signaling and/or higher-layer signaling. Based on the index of the encoder fed back by the terminal, the base station selects the corresponding decoder, and processes the received second channel information to obtain third channel information. If the parameter of only 1 set of encoder is configured, i.e., K0=1, then an index 0 is fed back to the terminal.

In some implementations, the compression layer in the encoder and the decompression layer in the decoder are both fully-connected layers. As shown in FIG. 29, each fully-connected layer has a weight being a two-dimensional matrix, for example, the fully-connected layer is a matrix of $n \times m$ in a compression layer, where n and m respectively represent input and output dimensions of the fully-connected layer corresponding to the compression module; and the fully-connected layer is a matrix of $m \times n$ in a decompression layer, where m and n respectively represent input and output dimensions of the fully-connected layer corresponding to the decompression module, where n is generally a relatively large number, for example, $n = N_t \times N_s \times C$, $N_t$, $N_s$ and C respectively represent the number of antennas corresponding to the channel matrix, the number of sampling points in a truncated time domain channel, and the number of channels. When $N_t = 32$, $N_s = 32$, and $C = 2$, $n = 2048$, and in the case of a compression ratio of 1/32, $m = 64$, so the number of parameters of the fully-connected layer is $n \times m = 131072$, that is, more than 130 thousand. The number of parameters of the fully-connected layer is increased linearly with the number of antennas and the number of sampling points. Further, the input and output dimensions n and m are fixed, each pair of n and m is desired to transmit or reserve a parameter set. The base station may transmit the network parameter of the encoder to the terminal through higher-layer signaling.

In some implementations, the compression layer in the encoder is constituted by a convolutional layer block, for example, a convolutional layer block obtained by a plurality of convolutional layers arranged in series and/or in parallel, as shown in FIG. 30, such as a residual block (resblock), a dense block (denseblock), or a convolutional block including a plurality of serial links. A plurality of convolutional layer blocks constitute a compression layer. The base station sends parameters of one or more convolutional layer blocks to the terminal by configuring high-layer signaling and/or physical layer signaling, and the terminal acquires the parameters of the one or more convolutional layer blocks by receiving the higher-layer signaling and/or physical layer signaling. The parameters of the convolutional layer blocks include, but are not limited to, at least one of: a convolution kernel size, a convolution kernel step, a data filling mode, a convolution kernel weight, or an activation function of each convolutional layer.

In some implementations, decompression layer in a decoder is formed by a set of deconvolutional layers, for example, a deconvolutional layer block obtained by a plurality of deconvolutional layers arranged in series and/or in parallel, such as a transposed convolutional layer, an atrous convolutional layer, or the like. Parameters of the deconvolutional layer block corresponding to each decoder and parameters of the convolutional layer block corresponding to each encoder may be obtained by means of online or offline training, and occur in pairs. The number of convolutional layers in the convolutional layer block or the deconvolutional layer block is determined by at least one of: the number of transmitting antennas, the number of receiving antennas, a channel rank, the number of physical resource blocks, the number of time domain sampling points, or a compression ratio. Since a size of each convolutional layer determines sizes of input and output of the convolutional layer block, each convolutional layer controls the sizes of input and output of the convolutional layer block with a different step. The situation is similar for the deconvolutional layer.

Example VI

This example is used to illustrate the use of uplink channel information to assist the second channel information.

Since the uplink channel and the downlink channel have partial reciprocity, by using the uplink channel information to assist the downlink channel information fed back by the terminal, the base station can more accurately obtain the downlink channel state, thereby saving the overhead of partial feedback by the terminal.

In some implementations, after sending all the pre-processed first channel information into the encoder for processing and compression, the terminal feeds back the second channel information to the base station. After the terminal obtains the sixth channel information $H_2$ in the decompression layer, the auxiliary channel information $H_U$ obtained by pre-processing the uplink channel information and stored in the base station is introduced for fusion, $H_2$ and $H_U$ have the same size, i.e., $N_t \times N_f \times C$, and $H_2$ is obtained in a mode corresponding to the compression and decompression modes of the convolution and deconvolution in example IV. $H_2$ and $H_U$ may be fused into two channel matrices each with a size $N_t \times N_f \times C$, and stacked by antenna dimension, granularity dimension, or channel dimension. Taking stacking by the channel dimension as an example, $H_2$ and $H_U$ are stacked to obtain fourth channel information with a size $N_t \times N_f \times 2C$, and the fourth channel information obtained after auxiliary processing of the uplink channel information is sent into a decoder for processing to obtain the third channel information. $H_2$ and $H_U$ may be fused into two vectors in stack each with a size L = $N_t \times N_f \times C$, here, $H_2$ is obtained in a mode corresponding to the compression and decompression modes of the fully-connected layer in example V. $H_2$ and $H_U$ are superimposed end to end to generate fourth channel information with a size 2L×1, and the fourth channel information obtained after the auxiliary processing of the uplink channel information is sent into a decoder for processing to obtain the third channel information. In some implementations, the generated third vector with the size 2L×1 may be subjected to matrix reconstruction to obtain a channel matrix with a size $N_t \times N_f \times 2C$, so as to facilitate extraction of the characteristics of the channel information. It should be noted that $H_2$ and $H_U$ have the same matrix form. For example, if the first channel information obtained by the terminal pre-processing the original channel information is constituted by an amplitude matrix and a phase matrix, then the auxiliary channel information used at the base station is also constituted by an amplitude matrix and a phase matrix.

In some implementations, after sending part of the pre-processed first channel information into the encoder for processing and compression, the terminal feeds back the second channel information to the base station. The part of first channel information includes at least one of a real part matrix, an imaginary part matrix, an amplitude matrix, a phase matrix, an absolute value matrix, or a sign matrix of the first channel information. After the terminal obtains the sixth channel information $H_2$ in the decompression layer, a corresponding part of the uplink channel information $H_U$ stored at the base station is introduced for fusion, $H_2$ and $H_U$ have the same size, i.e., $N_t \times N_f \times 1$, here, $H_2$ is obtained in a mode corresponding to the compression and decompression modes of the convolution and deconvolution in example IV. $H_2$ and $H_U$ may be fused into two channel matrices each with a size $N_t \times N_f \times 1$, and stacked by antenna dimension, granularity dimension, or channel dimension. Taking stacking by the channel dimension as an example, the fourth channel information after the stacking has a size $N_t \times N_f \times 2$, and the fourth channel information obtained after auxiliary processing of the uplink channel information is sent into a decoder for processing to obtain the third channel information. $H_2$ and $H_U$ may be fused into two vectors in stack each with a size L×1, where L = $N_t \times N_f \times 1$, here, $H_2$ is obtained in a mode corresponding to the compression and decompression modes of the fully-connected layer in example V. $H_2$ and $H_U$ are superimposed end to end to generate fourth channel information with a size 2L×1, and the fourth channel information obtained after the auxiliary processing of the uplink channel information is sent into a decoder for processing to obtain the third channel information. In some implementations, the third vector with the size $2L \times 1$ may be subjected to matrix reconstruction to obtain a channel matrix with a size $N_t \times N_f \times 2$, so as to facilitate extraction of the characteristics of the channel information. It should be noted that $H_2$ and $H_U$ have the same matrix form. For example: if the part of channel information obtained after the pre-processing by the terminal is constituted by an amplitude matrix, then the auxiliary uplink channel information used at the base station is also in the form of being constituted by an amplitude matrix.

Example VII

This example is used to illustrate how the base station obtains complete channel information.

To acquire complete channel information, the following two implementations are taken for illustration.

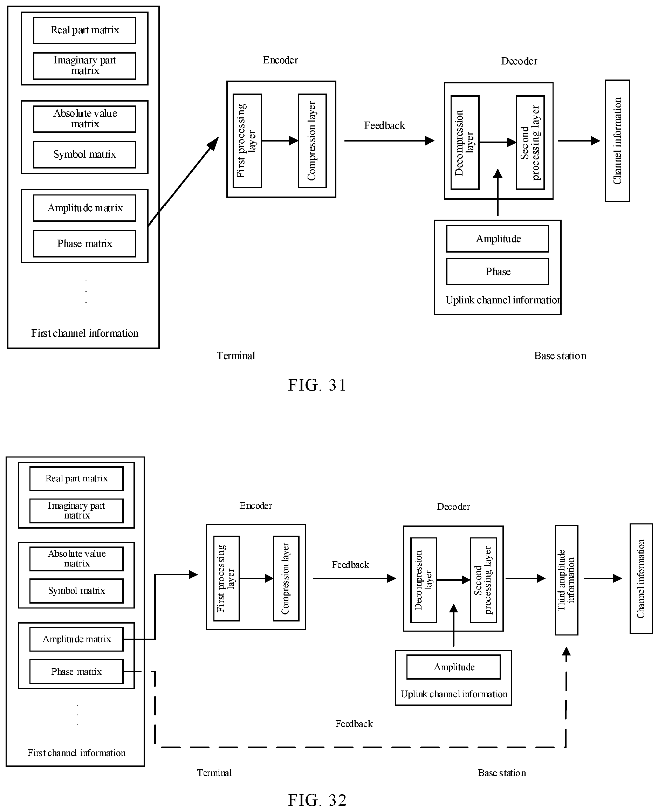

In some implementations, when the terminal feeds back the complete first channel information to a decoder of the base station, the decoder at the base station recovers the complete channel information, as shown in FIG. 31.

In some implementations, when the terminal feeds back part of the first channel information to a decoder of the base station, the part of first channel information includes at least one of a real part matrix, an imaginary part matrix, an amplitude matrix, a phase matrix, an absolute value matrix, or a sign matrix of the first channel information; and the decoder at the base station recovers the third channel information corresponding to the feedback mode, and the other part of the first channel information of the corresponding pre-processing mode directly fed back by the terminal. The recovered third channel information and the other part of the first channel information are integrated into the complete channel information, as shown in FIG. 32. The other part of the first channel information directly fed back may be transmitted to the base station after quantization, encoding, and modulation. The base station receives the other part of the first channel information, or uses the other part of the first channel information as the other part of the channel information after dequantization, demodulation and decoding, to form the complete channel information with third channel information output from the decoder. For example, when the first channel information pre-processed by the terminal includes an amplitude matrix and a phase matrix, the amplitude matrix is fed back to the base station by the encoder generating second channel information, the base station receives and decompresses the second channel information to obtain sixth channel information, fuses the sixth channel information and the amplitude information of the auxiliary channel information and sends the fused information to the decoder to generate third amplitude information. Meanwhile, the terminal directly feeds back the phase information of the first channel information to the base station to obtain third phase information, the third amplitude information and the third phase information are combined to obtain the complete channel information which has the same size and form as the first channel information.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, features, characteristics and/or elements described in connection with a particular embodiment may be used alone, or may be used in combination with features, characteristics and/or elements described in connection with other embodiments, unless expressly stated otherwise, as would be apparent to one skilled in the art. It will, therefore, be understood by those skilled in the art that various changes in form and details may be made therein without departing from the scope of the present disclosure as set forth in the appended claims.

**Claims**

1.  A method for processing channel state information, comprising:

    pre-processing original channel information to generate first channel information comprising a plurality of first channel information components;
    performing compression coding according to at least one first channel information component of the first channel information to generate second channel information; and
    feeding back channel state information comprising at least the second channel information.

2.  The method according to claim 1, wherein pre-processing the original channel information to generate the first channel information comprises:

    generating a plurality of original channel information components according to the original channel information, wherein the original channel information components have the same dimension as the original channel information; and
    stacking the plurality of the original channel information components to generate the first channel information, wherein one of the original channel information components constitutes one of the first channel information components.

3.  The method according to claim 2, wherein generating a plurality of original channel information components according to the original channel information comprises:

    extracting real parts of all elements in the original channel information to form a real part matrix as one of the original channel information components; and
    extracting imaginary parts of all elements in the original channel information to form an imaginary part matrix as one of the original channel information components.

4.  The method according to claim 2, wherein generating a plurality of original channel information components according to the original channel information comprises:

    extracting absolute values of real parts of all elements in the original channel information to form a real part absolute value matrix as one of the original channel information components;
    extracting symbols of real parts of all elements in the original channel information to form a real part symbol matrix as one of the original channel information components;
    extracting absolute values of imaginary parts of all elements in the original channel information to form an imaginary part absolute value matrix as one of the original channel information components; and
    extracting symbols of imaginary parts of all elements in the original channel information to form an imaginary part symbol matrix as one of the original channel information components.

5.  The method according to claim 2, wherein generating a plurality of original channel information components according to the original channel information comprises:

    extracting amplitudes of all elements in the original channel information to form an amplitude matrix as one of the original channel information components; and
    extracting phases of all elements in the original channel information to form a phase matrix as one of the original channel information components.

6.  The method according to any one of claims 2 to 5, wherein performing compression coding according to at least one first channel information component of the first channel information to generate second channel information comprises:

    performing compression coding on each of the first channel information components to obtain the second channel information; and
    feeding back channel state information comprises:
    taking the second channel information as the channel state information for feedback.

7.  The method according to any one of claims 2 to 5, wherein the plurality of first channel information components of the first channel information comprise a component to be compressed and a non-compressed component, performing compression coding according to at least one first channel information component of the first channel information to generate second channel information comprises:

performing compression coding on a first channel information component serving as the component to be compressed to obtain the second channel information; and
feeding back channel state information comprises:
taking the second channel information and the first channel information component serving as the non-compressed component as the channel state information for feedback.

8. The method according to any one of claims 1 to 5, further comprising:

before pre-processing the original channel information to generate first channel information, determining, according to channel characteristic information, a pre-processing mode for pre-processing the original channel information; and
feeding back information of the determined pre-processing mode to a base station.

9. The method according to claim 8, wherein feeding back information of the determined pre-processing mode to the base station comprises:
transmitting an index of the determined pre-processing mode to the base station through at least one of physical layer signaling or higher-layer signaling.

10. The method according to any one of claims 1 to 5, further comprising:

before performing compression coding according to at least one first channel information component of the first channel information to generate second channel information, determining, according to channel characteristic information, a feedback mode for feeding back the channel state information, wherein the feedback mode indicates performing compression coding on all first channel information components of the first channel information, or performing compression coding on part of first channel information components of the first channel information; and
feeding back information of the determined feedback mode to a base station.

11. The method according to any one of claims 1 to 5, further comprising:

before performing compression coding according to at least one first channel information component of the first channel information to generate second channel information, selecting, according to channel characteristic information, one of at least one set of neural network parameter of pre-configured auto-encoder, and determining an encoder configured to perform compression coding on the at least one first channel information component of the first channel information; and
feeding back an index of the neural network parameter of the selected auto-encoder to a base station so that the base station selects a decoder according to the index of the neural network parameter of the selected auto-encoder;
wherein each auto-encoder comprises a pair of encoder and decoder.

12. The method according to claim 11, wherein the neural network parameter comprises at least one of a compression ratio, an activation function, a number of network layers, a network layer weight, a network layer bias, or a network layer weight normalization coefficient.

13. The method according to claim 11, wherein the encoder comprises a first processing layer and a compression layer; the first processing layer comprises a plurality of network layers, each of which comprises a plurality of nodes, at least one network layer weight and an activation function, or the network layer further comprises a network layer bias; the compression layer comprises a fully-connected layer or at least one convolutional layer block, wherein the convolutional layer block comprises at least one of a plurality of convolutional layers in series or a plurality of convolutional layers in parallel.

14. The method according to any one of claims 1 to 5, wherein the original channel information comprises any one of time domain channel information, frequency domain channel information, or pre-coded channel information.

**15.** A method for processing channel state information, comprising:

receiving channel state information comprising at least second channel information obtained by performing compression coding according to at least one first channel information component of first channel information, wherein the first channel information is obtained by pre-processing original channel information;
performing decompression decoding according to the second channel information to obtain third channel information; and
determining target channel information according to at least the third channel information.

**16.** The method according to claim 15, wherein performing decompression decoding according to the second channel information to obtain third channel information comprises:

decompressing the second channel information to obtain sixth channel information;
generating fourth channel information according to auxiliary channel information and the sixth channel information; and
decoding the fourth channel information to obtain the third channel information.

**17.** The method according to claim 16, wherein generating fourth channel information according to auxiliary channel information and the sixth channel information comprises:
stacking the auxiliary channel information and the sixth channel information to generate the fourth channel information.

**18.** The method according to claim 16, wherein generating fourth channel information according to auxiliary channel information and the sixth channel information comprises:

generating a first vector according to the auxiliary channel information;
generating a second vector according to the sixth channel information; and
generating the fourth channel information from the first vector and the second vector.

**19.** The method according to claim 18, wherein generating the fourth channel information from the first vector and the second vector comprises:

stacking the first vector and the second vector to generate a third vector; and
generating a channel matrix according to the third vector, and obtaining the fourth channel information.

**20.** The method according to any one of claims 16 to 19, further comprising:

before performing decompression decoding according to the second channel information to obtain third channel information, pre-processing, according to pre-processing mode information for pre-processing the original channel information fed back by the terminal, uplink channel information according to a pre-processing mode for pre-processing the original channel information by the terminal, and
determining the auxiliary channel information according to the pre-processed uplink channel information.

**21.** The method according to claim 20, wherein determining the auxiliary channel information according to the pre-processed uplink channel information comprises:
forming, according to information of feedback mode fed back by the terminal, the auxiliary channel information from at least one uplink channel information component of the pre-processed uplink channel information, wherein information of the feedback mode indicates that the terminal performs compression coding on all first channel information components of the first channel information, or performs compression coding on part of first channel information components of the first channel information.

**22.** The method according to any one of claims 15 to 19, wherein the channel state information comprises the second channel information; and determining target channel information according to at least the third channel information comprises:
performing, according to pre-processing mode information for pre-processing the original channel information fed back by the terminal, inverse processing on the third channel information to obtain the target channel information.

**23.** The method according to any one of claims 15 to 19, wherein the plurality of first channel information components of the first channel information comprise a non-compressed component and a component to be compressed; the second channel information is obtained by performing compression coding on the first channel information component serving as the component to be compressed; the channel state information comprises the second channel information and the first channel information component serving as the non-compressed component; and determining target channel information according to at least the third channel information comprises:

integrating the third channel information with the first channel information component serving as the non-compressed component to obtain fifth channel information; and
performing, according to pre-processing mode information for pre-processing the original channel information fed back by the terminal, inverse processing on the fifth channel information to obtain the target channel information.

24. The method according to any one of claims 15 to 19, further comprising:
before performing decompression decoding according to the second channel information to obtain third channel information, selecting, according to an index of a neural network parameter of an auto-encoder fed back by the terminal, a decoder configured to perform decompression decoding on the second channel information, wherein each auto-encoder comprises a pair of encoder and decoder.

25. The method according to claim 24, wherein the neural network parameter comprises at least one of a compression ratio, an activation function, a number of network layers, a network layer weight, a network layer bias, or a network layer weight normalization coefficient.

26. The method according to claim 24, wherein the decoder comprises a second processing layer and a decompression layer; the second processing layer comprises a plurality of network layers each comprising a plurality of nodes, at least one network layer weight and an activation function, or the network layer further comprises a network layer bias; the decompression layer comprises a fully-connected layer or at least one deconvolutional layer block, wherein the deconvolutional layer block comprises at least one of a plurality of deconvolutional layers in series or a plurality of deconvolutional layers in parallel.

27. The method according to any one of claims 15 to 19, further comprising:

determining at least one of indexes of a plurality of pre-processing modes, indexes of a plurality of feedback modes, or indexes of neural network parameters of a plurality of sets of auto-encoders; and
configuring at least one of the indexes of the plurality of pre-processing modes, the indexes of the plurality of feedback modes, or the indexes of neural network parameters of the plurality of sets of auto-encoders to the terminal through at least one of physical layer signaling or higher-layer signaling.

28. A terminal, comprising:

at least one processor; and
a memory having at least one computer program stored thereon which, when executed by the at least one processor, causes the at least one processor to implement the method for processing channel state information according to any one of claims 1 to 14; and
at least one I/O interface connected between the processor and the memory and configured to enable information interaction between the processor and the memory.

29. A base station, comprising:

at least one processor; and
a memory having at least one computer program stored thereon which, when executed by the at least one processor, causes the at least one processor to implement the method for processing channel state information according to any one of claims 15 to 27; and
at least one I/O interface connected between the processor and the memory and configured to enable information interaction between the processor and the memory.

30. A computer-readable storage medium having a computer program stored thereon which, when executed by a processor, causes the method for processing channel state information according to any one of claims 1 to 27 to be implemented.

S100

Pre-process original channel information to generate first channel information including a plurality of first channel information components

S200

Perform compression coding according to at least one first channel information component of the first channel information to generate second channel information

S300

Feed back channel state information including at least the second channel information

FIG. 1

<u>S100</u>

S110

Generate a plurality of original channel information components according to the original channel information, where the original channel information components have the same dimensionality as the original channel information

S120

Stack a plurality of the original channel information components to generate the first channel information, where one of the original channel information components constitutes one of the first channel information components

FIG.2

<u>S110</u>

S111

Extract real parts of all elements in the original channel information to form a real part matrix as one of the original channel information components

S112

Extract imaginary parts of all elements in the original channel information to form an imaginary part matrix as one of the original channel information components

FIG.3

S110

| Extract absolute values of real parts of all elements in the original channel information to form a real part absolute value matrix as one of the original channel information components | S113 |

| Extract symbols of real parts of all elements in the original channel information to form a real part symbol matrix as one of the original channel information components | S114 |

| Extract absolute values of imaginary parts of all elements in the original channel information to form an imaginary part absolute value matrix as one of the original channel information components | S115 |

| Extract symbols of imaginary parts of all elements in the original channel information to form an imaginary part symbol matrix as one of the original channel information components | S116 |

FIG.4

S110

| Extract amplitudes of all elements in the original channel information to form an amplitude matrix as one of the original channel information components | S117 |

| Extract phases of all elements in the original channel information to form a phase matrix as one of the original channel information components | S118 |

FIG. 5

| Pre-process original channel information to generate first channel information including a plurality of first channel information components | S100 |

S200

| Perform compression coding on each of the first channel information components to obtain the second channel information | S210 |

S300

| Take the second channel information as the channel state information for feedback | S310 |

FIG. 6

S100

Pre-process original channel information to generate first channel information including a plurality of first channel information components

S200

S220

Perform compression coding on a first channel information component serving as the component to be compressed to obtain the second channel information

S300

S320

Take the second channel information and the first channel information component serving as the non-compressed component as the channel state information for feedback

FIG. 7

S410

Determine, according to channel characteristic information, a pre-processing mode for pre-processing the original channel information

S420

Feed back information of the determined pre-processing mode to a base station

S100

Pre-process original channel information to generate first channel information including a plurality of first channel information components

S200

Perform compression coding according to at least one first channel information component of the first channel information to generate second channel information

S300

Feed back channel state information including at least the second channel information

FIG. 8

S420

S421

Transmit an index of the determined pre-processing mode to the base station through physical layer signaling and/or higher-layer signaling

FIG. 9

S100

Pre-process original channel information to generate first channel information including a plurality of first channel information components

S430

Determine, according to channel characteristic information, a feedback mode for feeding back the channel state information, where the feedback mode indicates performing compression coding on all or part of first channel information components of the first channel information

S440

Feed back information of the determined feedback mode to a base station

S200

Perform compression coding according to at least one first channel information component of the first channel information to generate second channel information

S300

Feed back channel state information including at least the second channel information

FIG. 10

S100

Pre-process original channel information to generate first channel information including a plurality of first channel information components

S510

Select, according to channel characteristic information, one of at least one set of neural network parameter of auto-encoder, and determine an encoder configured to perform compression coding on the at least one first channel information component of the first channel information

S520

Feed back an index of the neural network parameter of the selected auto-encoder to a base station so that the base station selects a decoder according to the index of the neural network parameter of the selected auto-encoder

S200

Perform compression coding according to at least one first channel information component of the first channel information to generate second channel information

S300

Feed back channel state information including at least the second channel information

FIG. 11

S600

Receive channel state information including at least second channel information obtained by performing compression coding according to at least one first channel information component of first channel information, where the first channel information is obtained by pre-processing original channel information

S700

Perform decompression decoding according to the second channel information to obtain third channel information

S800

Determine target channel information according to at least the third channel information

FIG. 12

S700

S710

Decompress the second channel information to obtain sixth channel information

Generate fourth channel information according to auxiliary channel information and the sixth channel information

S720

Decode the fourth channel information to obtain the third channel information

S730

FIG. 13

S720

S721

Stack the auxiliary channel information and the sixth channel information to generate the fourth channel information

FIG. 14

S720

Generate a first vector according to the auxiliary channel information

S722

Generate a second vector according to the sixth channel information

S723

Generate the fourth channel information from the first vector and the second vector

S724

FIG. 15

S724

S724a

Stack the first vector and the second vector to generate a third vector

S724b

Generate a channel matrix according to the third vector, and obtain the fourth channel information

FIG. 16

S600

Receive channel state information including at least second channel information

S910

According to pre-processing mode information for pre-processing the original channel information fed back by the terminal, pre-process uplink channel information according to a pre-processing mode for pre-processing the original channel information by the terminal

S920

Determine the auxiliary channel information according to the pre-processed uplink channel information

S700

Perform decompression decoding according to the second channel information to obtain third channel information

S800

Determine target channel information according to at least the third channel information

FIG. 17

S920

S921

Form, according to information of feedback mode fed back by the terminal, the auxiliary channel information from at least one uplink channel information component of the pre-processed uplink channel information, where information of the feedback mode indicates that the terminal performs compression coding on all first channel information components of the first channel information, or performs compression coding on part of first channel information components of the first channel information

FIG. 18

S800

S810

According to pre-processing mode information for pre-processing the original channel information fed back by the terminal, perform inverse processing on the third channel information to obtain the target channel information

FIG. 19

S800

S820

Integrate the third channel information with the first channel information component, which is the non-compressed component, to obtain fifth channel information

S830

According to pre-processing mode information for pre-processing the original channel information fed back by the terminal, perform inverse processing on the fifth channel information to obtain the target channel information

FIG. 20

S600

Receive channel state information including at least second channel information

S930

Select, according to an index of a neural network parameter of an auto-encoder fed back by the terminal, a decoder configured to perform decompression decoding on the second channel information, where each auto-encoder includes a pair of encoder and decoder

S700

Perform decompression decoding according to the second channel information to obtain third channel information

S800

Determine target channel information according to at least the third channel information

FIG. 21

S940

Determine at least one of indexes of a plurality of pre-processing modes, indexes of a plurality of feedback modes, or indexes of neural network parameters of a plurality of sets of auto-encoders

S950

Configure the indexes of the plurality of pre-processing modes and/or the indexes of the plurality of feedback modes and/or the indexes of the neural network parameters of a plurality sets of auto-encoders to the terminal through physical layer signaling and/or higher-layer signaling

FIG. 22

103

102

I/O interface

Memory

104

101

Processor

FIG. 23

203

202

I/O interface

Memory

204

201

Processor

FIG. 24

Computer-readable medium

FIG. 25

Index 0 — Real part matrix / Imaginary part matrix

Index 1 — Absolute value matrix / Symbol matrix

Index 2 — Amplitude matrix / Phase matrix

.
.
.

First channel information

Indicator 0

Encoder

Feedback

Base station

**FIG. 26**

Index 0 — 0 Real part matrix / 1 Imaginary part matrix

Index 1 — 0 Absolute / 1 Symbol matrix

Index 2 — 0 Amplitude matrix / 1 Phase matrix

.
.
.

First channel information

Indicator 1

Encoder

Feedback

Base station

Feedback

Terminal

**FIG. 27**

FIG. 28

FIG. 29

FIG. 30

FIG. 31

FIG. 32

<table>
<tr><td colspan="2">**INTERNATIONAL SEARCH REPORT**</td><td colspan="2">International application No.<br>**PCT/CN2022/117269**</td></tr>
</table>

**A.    CLASSIFICATION OF SUBJECT MATTER**

H04B 7/0456(2017.01)i;  H04B 7/06(2006.01)i

According to International Patent Classification (IPC) or to both national classification and IPC

**B.    FIELDS SEARCHED**

Minimum documentation searched (classification system followed by classification symbols)

H04B H04L H04W

Documentation searched other than minimum documentation to the extent that such documents are included in the fields searched

Electronic data base consulted during the international search (name of data base and, where practicable, search terms used)

CNTXT; VEN; VCN; ENTXT; CNKI; 3GPP: 信道状态信息, 反馈, 压缩, 实数, 实部, 虚部, 虚数, 幅度, 相位, 分量, 部分, CSI, compression, amplitude, real, phase, imaginary, component

**C.    DOCUMENTS CONSIDERED TO BE RELEVANT**

| Category* | Citation of document, with indication, where appropriate, of the relevant passages | Relevant to claim No. |
|---|---|---|
| X | CN 111314034 A (NOKIA TECHNOLOGIES OY) 19 June 2020 (2020-06-19)<br>description, paragraphs [0013]-[0180] | 1, 2, 6, 8-22, 24-30 |
| Y | CN 111314034 A (NOKIA TECHNOLOGIES OY) 19 June 2020 (2020-06-19)<br>description, paragraphs [0013]-[0180] | 3-5, 7, 23 |
| Y | CN 112075031 A (SAMSUNG ELECTRONICS CO., LTD.) 11 December 2020 (2020-12-11)<br>description, paragraph [0154] | 3-5 |
| Y | CN 104396154 A (MARVELL WORLD TRADE LTD.) 04 March 2015 (2015-03-04)<br>claims 1-22 | 7, 23 |
| A | CN 110350958 A (SOUTHEAST UNIVERSITY) 18 October 2019 (2019-10-18)<br>entire document | 1-30 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2022** | **30 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117269**

| Patent document cited in search report | | | Publication date (day/month/year) | Patent family member(s) | | | Publication date (day/month/year) |
|---|---|---|---|---|---|---|---|
| CN | 111314034 | A | 19 June 2020 | US | 2020186224 | A1 | 11 June 2020 |
| | | | | EP | 3667940 | A1 | 17 June 2020 |
| CN | 112075031 | A | 11 December 2020 | EP | 3776892 | A1 | 17 February 2021 |
| | | | | KR | 20200136983 | A | 08 December 2020 |
| | | | | WO | 2019209088 | A1 | 31 October 2019 |
| | | | | US | 2019334587 | A1 | 31 October 2019 |
| CN | 104396154 | A | 04 March 2015 | WO | 2014003898 | A1 | 03 January 2014 |
| | | | | US | 2013308713 | A1 | 21 November 2013 |
| CN | 110350958 | A | 18 October 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111039828